(19) Europäisches Patentamt
European Patent Office
Office européen des brevets

(11) **EP 4 657 331 A1**

(12) **EUROPEAN PATENT APPLICATION**

(43) Date of publication:
**03.12.2025 Bulletin 2025/49**

(21) Application number: 24179389.2

(22) Date of filing: **31.05.2024**

(51) International Patent Classification (IPC):
*G06N 10/20* (2022.01)        *G06F 8/41* (2018.01)

(52) Cooperative Patent Classification (CPC):
**G06N 10/20; G06F 8/443**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Bull SAS**
**78340 Les Clayes-sous-Bois (FR)**

(72) Inventor: **VANDAELE, Vivien**
**59218 Vendegies-au-Bois (FR)**

(74) Representative: **Plasseraud IP**
**104 Rue de Richelieu**
**CS92104**
**75080 Paris Cedex 02 (FR)**

(54) **DATA PROCESSING METHOD AND APPARATUSES FOR IMPLEMENTING THE SAME**

(57)    A data processing method for processing a first quantum circuit that can be implemented using n qubits is proposed, which comprises: Determining a first ZX-diagram that represents the first quantum circuit; Performing one or more operations on the first ZX-diagram to generate a second ZX-diagram; Determining a second quantum circuit that is represented by the second ZX-diagram, wherein the one or more operations on the first ZX-diagram are configured to reduce the number of qubits with which the second quantum circuit can be implemented to be less than the n qubits.

```
                    ┌──────────────────────────────────────────┐
              11    │  Determining a first ZX-diagram that       │
                    │  represents the first quantum circuit      │
                    └──────────────────────────────────────────┘
                    ┌──────────────────────────────────────────┐
              12    │  Performing one or more operations on      │
                    │  the first ZX-diagram to generate a        │
                    │  second ZX-diagram                         │
                    └──────────────────────────────────────────┘
                    ┌──────────────────────────────────────────┐
              13    │  Determining a second quantum circuit      │
                    │  that is represented by the second         │
                    │  ZX-diagram, wherein the one or more       │
                    │  operations on the first ZX-diagram are    │
                    │  configured to reduce the number of        │
                    │  qubits with which the second quantum      │
                    │  circuit can be implemented to be less     │
                    │  than the n qubits                         │
                    └──────────────────────────────────────────┘
              10
```

**FIG. 6**

**Description**

The present subject disclosure relates to the field of quantum computing, in particular to the processing of data representing a quantum circuit executable on a quantum computer.

In the field of quantum computing, a quantum computing program, that is, a program that is executable on a quantum computer, can be generated from a quantum circuit that corresponds to the program. Quantum circuit synthesis corresponds to the decomposition of a unitary operator that corresponds to a quantum circuit into a sequence of quantum gates.

Optimizing the resources required to implement a given quantum algorithm is crucial for improving the practicability and efficiency of quantum computation. It has been shown that using additional qubits can enable significant reductions in both the computational depth and the number of operations required to perform the computation. For instance, the most effective T-count optimizers are heavily relying on ancillary qubits. Nevertheless, a substantial increase in the number of qubits may counteract the gains achieved through T-count optimization. The number of qubits is therefore a critical resource that should be minimized or at least reduced.

There is therefore a need for an improved data processing method for reducing the number of qubits of an input quantum circuit that addresses the drawbacks and shortcomings, or improves the performances of the conventional technology in the art.

In particular, it is an object of the present subject disclosure to provide an improved data processing method for execution on a computational device that addresses the drawbacks and shortcomings of the conventional technology in the art.

Another object of the present subject disclosure is to provide a data processing method suitable for reducing the number of qubits in a quantum circuit using a computer with improved efficiency.

Yet another object of the present subject disclosure is to provide a data processing method suitable for optimizing the number of qubits in a quantum circuit of an input quantum circuit using a computer.

Yet another object of the present subject disclosure is to provide a data processing method suitable for optimizing the number of qubits in a quantum circuit of an input quantum circuit while preserving the optimized number of non-Clifford gates using a computer.

Yet another object of the present subject disclosure is to provide a data processing method suitable for reducing the number of qubits in a quantum circuit of an input quantum circuit while preserving the optimized number of non-Clifford gates using a computer.

To achieve these objects and other advantages and in accordance with the purpose of the present subject disclosure, as embodied and broadly described herein, in one aspect of the present subject disclosure, a data processing method for use on a (quantum or classical) computational device is proposed.

A data processing method for processing a first quantum circuit that can be implemented using n qubits is proposed, which comprises: determining a first ZX-diagram that represents the first quantum circuit; performing one or more operations on the first ZX-diagram to generate a second ZX-diagram (for example, in some embodiments, by reordering / rearranging the order of the spiders in the first ZX-diagram) ; and determining a second quantum circuit that is represented by the second ZX-diagram, wherein the one or more operations on the first ZX-diagram are configured to reduce the number of qubits with which the second quantum circuit can be implemented to be less than the n qubits.

Advantageously, the present subject disclosure uses ZX-calculus in order to determine, based on an input quantum circuit that can be implemented with a given number of qubits, a quantum circuit that implements the same operator as the input quantum circuit and is improved as compared to the input quantum circuit as it can be implemented with less qubits than the given number of qubits.

In one or more embodiments, performing the one or more operations on the first ZX-diagram may comprises: Applying one or more rewriting rules of the ZX-calculus on the first ZX-diagram to generate the second ZX-diagram.

In one or more embodiments, the one or more operations may comprise: Determining a graph data structure based on the first ZX-diagram, based on graph configuration data which comprise a mapping between vertices of the graph data structure and respective spider data of one or more spiders of the first ZX-diagram; Performing data processing on the graph data structure based on an algorithm to determine a sequence of subsets of vertices of the graph data structure; and Determining the second ZX-diagram based on the graph data structure and the determined sequence of subsets of vertices. In such embodiments, a graph data structure is advantageously associated with the first ZX-diagram. As a result, graph processing algorithm may advantageously be used for purposes of performing operations on the corresponding ZX-diagram in order to reduce the number of qubits required for implementing the corresponding quantum circuit.

In some embodiments, spider data may comprise one or more of an identifier, an angle and a type.

In some embodiments, the graph data structure may be an undirected graph.

In one or more embodiments, the graph data structure may comprise: a respective vertex for each spider of the first ZX-diagram, one or more input vertex corresponding to each input wire of the first ZX-diagram, and one or more output vertex corresponding to each output wire of the first ZX-diagram, and respective edges, between each pair of vertices that correspond to adjacent spiders in the first ZX-diagram, between each vertex that corresponds to a respective input wire of the first ZX-diagram and vertex that corresponds to a spider incident to the input wire of the first ZX-diagram, and between each vertex that corresponds to a respective output wire of the first ZX-diagram and vertex that corresponds to a spider incident to the output wire of the first ZX-diagram.

In one or more embodiments, the one or more operations may comprise one or more operations of rearranging an order of spiders in (a current ZX-diagram determined based on) the first ZX-diagram.

In one or more embodiments, the data processing performed on the graph data structure may comprise: determining an ordered sequence (ordering) of vertices of the graph data structure (e.g. by ordering vertices of a set of to be ordered vertices of the graph data structure), wherein the first vertex of the ordered sequence corresponds to the input wires of the first ZX-diagram and the last vertex of the ordered sequence corresponds to the output wires of the first ZX-diagram. In some embodiments, the ordered sequence may be determined by ordering vertices of a subset of (to be ordered) vertices of the graph data structure. Advantageously, an ordered sequence of vertices of the graph associated with an optimized cutwidth may be determined, and corresponding ZX-diagram and quantum circuit implementable with less qubits may then be determined.

In one or more embodiments, the data processing performed on the graph data structure may comprise: applying an algorithm (e.g. a cutwidth reduction algorithm) on vertices of the graph data structure to determine an ordered sequence of vertices of the graph associated with an optimized cutwidth.

In one or more embodiments, the one or more operations may comprise one or more operations of fusion of one or more spiders of (a ZX-diagram determined based on) the first ZX-diagram. In embodiments, an operation of fusion may comprise: Merging a plurality of spiders having respective phases into one merged spider, wherein the resulting phase of the merged spider is determined based on a combination of the respective phases.

In one or more embodiments, the data processing performed on the graph data structure may comprise: determining a path-decomposition of the graph or any of its subgraphs.

In one or more embodiments, the data processing performed on the graph data structure may comprise: applying an algorithm (e.g. a pathwidth reduction algorithm) on vertices of the graph data structure to determine an path-decomposition of the graph having an optimized width.

In one or more embodiments, the second ZX-diagram may be generated based on performing an un-fusion operation on one or more spiders of an intermediate ZX-diagram generated based on the optimized graph data structure. In some embodiments, the operation of un-fusion may comprise: generating a plurality of spiders having respective phases based on a spider of the intermediate ZX-diagram, and the respective phases of the plurality of spiders may be determined based on a phase of the spider of the intermediate ZX-diagram.

In one or more embodiments, the one or more operations may comprise a lattice surgery sequentialization operation performed on an intermediate ZX-diagram generated based on the first ZX-diagram.

In one or more embodiments, the one or more operations may comprise a ZX-diagram simplification operation performed on an intermediate ZX-diagram generated based on the first ZX-diagram.

In one or more embodiments, the proposed method may comprise: producing the second quantum circuit.

A data set representing, for example through compression or encoding, a computer program product according to claim 16.

According to another aspect, a non-quantum computational device is proposed, which comprises a processor and a memory operatively coupled to the processor, wherein the device is configured to perform embodiments of a method proposed in the present subject disclosure.

According to yet another aspect, a quantum computational device is proposed, which comprises a quantum processor and a (quantum) memory operatively coupled to the quantum processor, wherein the device is configured to perform embodiments of a method proposed in the present subject disclosure.

According to yet another aspect, a computational device is proposed, which is configured to perform embodiments of a method proposed in the present subject disclosure.

According to yet another aspect, a computer program product comprising computer program code (e.g. tangibly) embodied in a computer readable medium is proposed, said computer program code comprising instructions to, when provided to a computer system and executed, cause said computer to perform embodiments of a method proposed in the present subject disclosure.

According to yet another aspect, a computer program product comprising computer program code (e.g. tangibly) embodied in a computer readable medium is proposed, said computer program code comprising instructions to, when provided to a non-quantum computer system and executed, cause said computer to perform embodiments of a method proposed in the present subject disclosure.

According to yet another aspect, a data set representing, for example through compression or encoding, a proposed computer program product is proposed.

It should be appreciated that the present invention can be implemented and utilized in numerous ways, including without limitation as a process, an apparatus, a system, a device, and as a method for applications now known and later developed. These and other unique features of the system disclosed herein will become more readily apparent from the following description and the accompanying drawings.

## Brief description of the drawings

The present subject disclosure will be better understood and its numerous objects and advantages will become more apparent to those skilled in the art by reference to the following drawings, in conjunction with the accompanying specification, in which:

Figure 1a is an exemplary diagram illustrating a quantum *NOT* gate;
Figure 1b is an exemplary diagram illustrating a quantum *CNOT* gate;
Figure 1c is an exemplary diagram illustrating a quantum T gate;
Figure 1d is an exemplary diagram illustrating a quantum Hadamard gate;
Figures 2a and 2b are exemplary diagrams illustrating exemplary spiders of exemplary ZX-diagrams;
Figure 3a is an exemplary diagram illustrating a quantum Hadamard gate;
Figure 3b illustrates an exemplary ZX-diagram - quantum circuit correspondence table that may be used in accordance with one or more embodiments;
Figure 4a illustrates an identity rule of ZX-calculus that may be used in accordance with one or more embodiments;
Figure 4b illustrates a fusion rule of Z spiders of ZX-calculus that may be used in accordance with one or more embodiments;

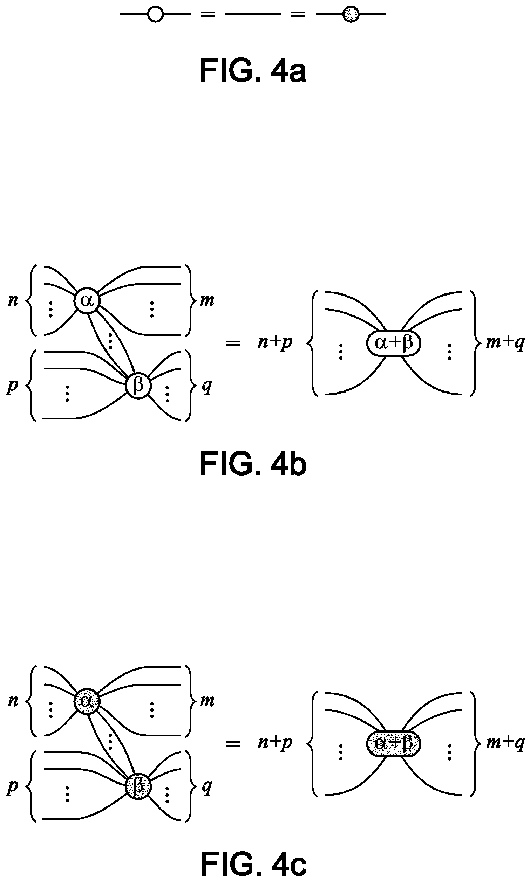

Figure 4a illustrates a fusion rule of X spiders of ZX-calculus that may be used in accordance with one or more embodiments;

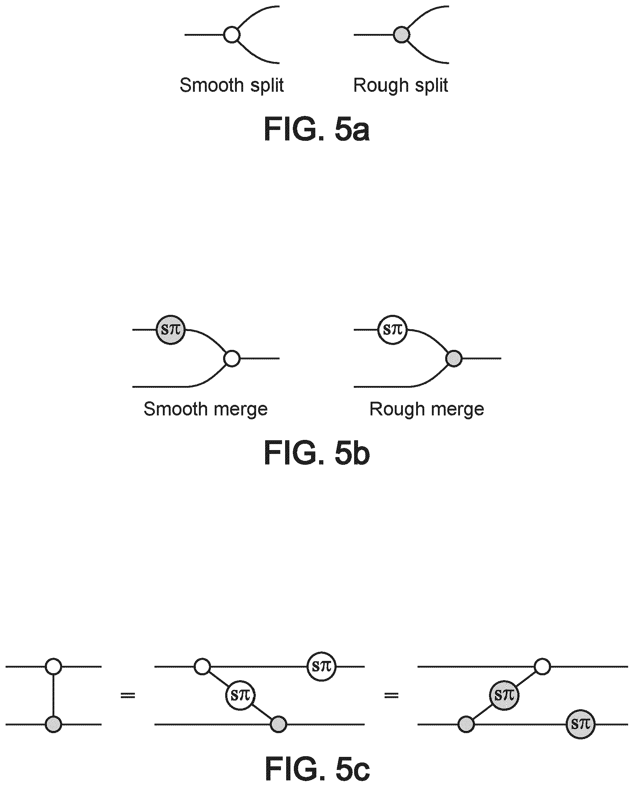

Figure 5a illustrates split operations in lattice surgery that may be used in accordance with one or more embodiments;
Figure 5b illustrates merge operations in lattice surgery that may be used in accordance with one or more embodiments;
Figure 5c illustrates an exemplary implementation of a CNOT quantum gate using lattice surgery operations that may be used in accordance with one or more embodiments;

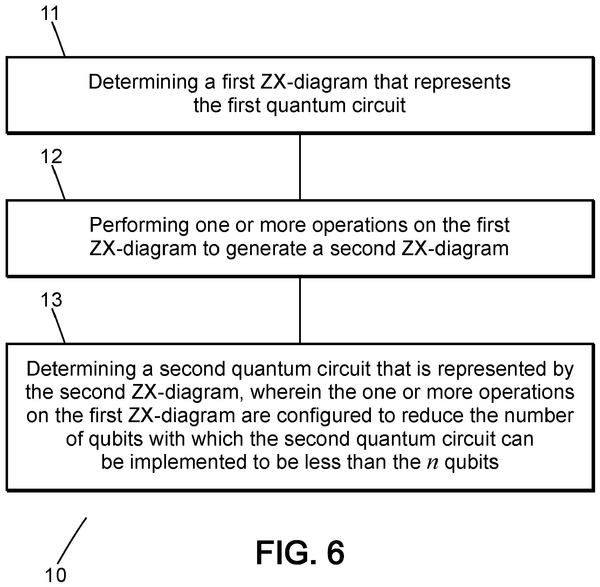

Figure 6 is a block diagram illustrating an exemplary data processing method, in accordance with one or more embodiments;

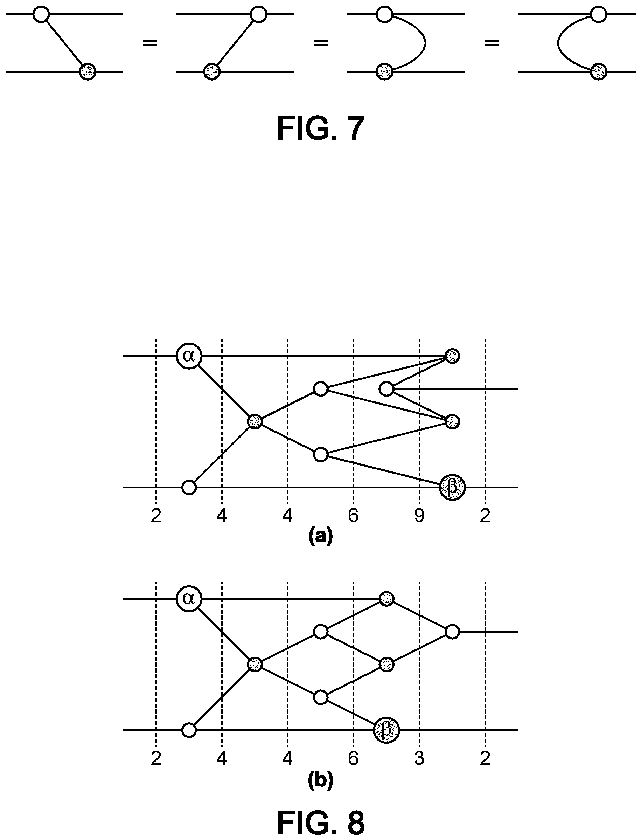

Figure 7 illustrates different exemplary ZX-diagrams that correspond to a CNOT quantum gate;
Fig. 8(a) illustrates an exemplary first ZX-diagram and Fig. 8(b) illustrates an exemplary second ZX-diagram that is equivalent to the first ZX-diagram in accordance with one or more embodiments;

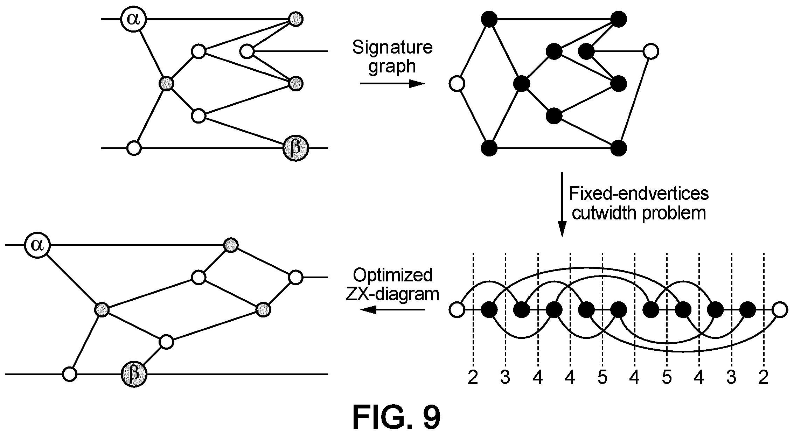

Figure 9 illustrates an exemplary data processing method, in accordance with one or more embodiments;

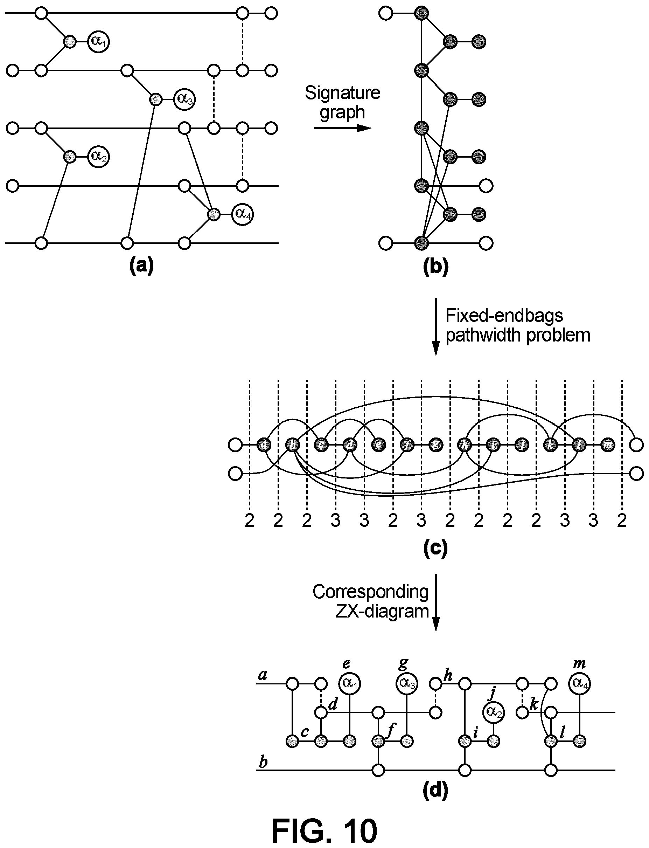

Figure 10 illustrates an exemplary data processing method, in accordance with one or more embodiments;

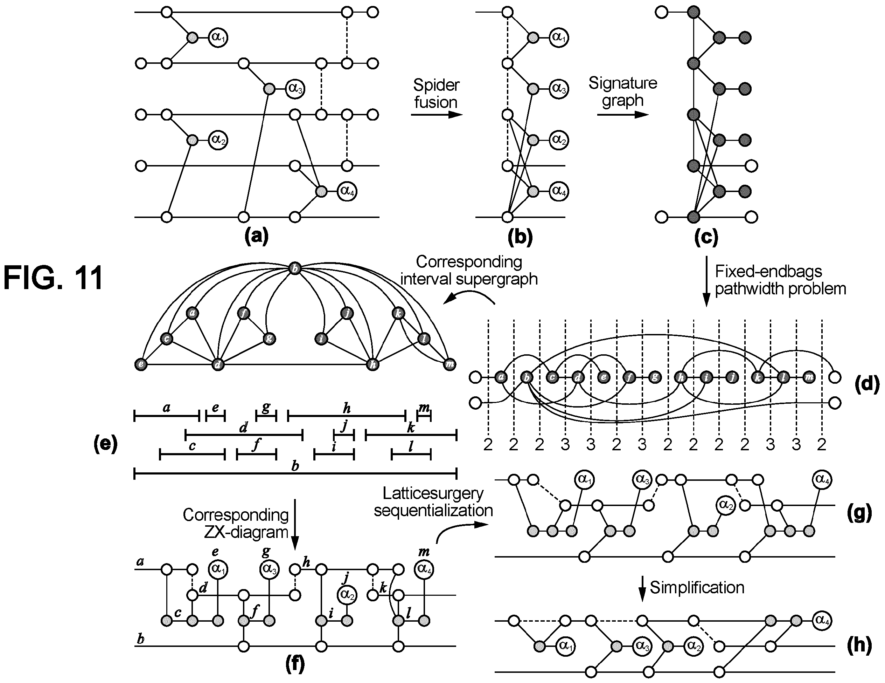

Figure 11 illustrates an exemplary data processing method, in accordance with one or more embodiments;

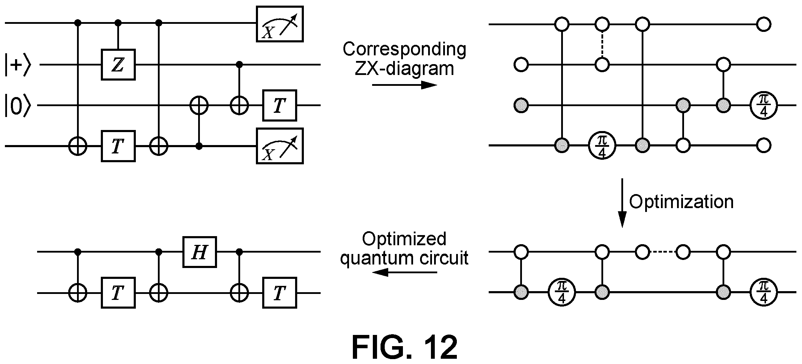

Figure 12 illustrates an exemplary data processing method, in accordance with one or more embodiments;

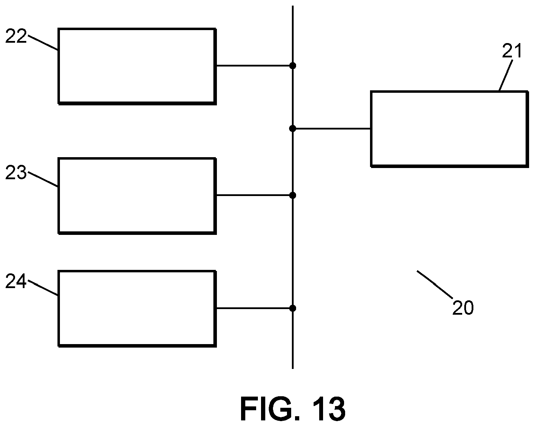

Figure 13 illustrates an exemplary architecture of a quantum computational device in accordance with one or more embodiments.

## Description of embodiments

The advantages, and other features of the components disclosed herein, will become more readily apparent to those having ordinary skill in the art form. The following detailed description of certain preferred embodiments, taken in conjunction with the drawings, sets forth representative embodiments of the subject technology, wherein like reference numerals identify similar structural elements.

For simplicity and clarity of illustration, the drawing figures illustrate the general manner of construction, and descriptions and details of well-known features and techniques may be omitted to avoid unnecessarily obscuring the discussion of the described embodiments of the subject disclosure. Additionally, elements in the drawing figures are not necessarily drawn to scale. For example, the dimensions of some of the elements in the figures may be exaggerated relative to other elements to help improve understanding of embodiments of the present subject disclosure. Certain figures may be shown in an idealized fashion in order to aid understanding, such as when structures are shown having straight lines, sharp angles, and/or parallel planes or the like that under real-world conditions would likely be significantly less symmetric and orderly.

In addition, it should be apparent that the teaching herein can be embodied in a wide variety of forms and that any specific structure and/or function disclosed herein is merely representative. In particular, one skilled in the art will appreciate that an aspect disclosed herein can be implemented independently of any other aspects and that several aspects can be combined in various ways.

The present disclosure is described below with reference to functions, engines, block diagrams and flowchart illustrations of the methods, systems, and computer program according to one or more exemplary embodiments. Each described function, engine, block of the block diagrams and flowchart illustrations can be implemented in hardware, software, firmware, middleware, microcode, or any suitable combination thereof. If implemented in software, the functions, engines, blocks of the block diagrams and/or flowchart illustrations can be implemented by computer program instructions or software code, which may be stored or transmitted over a computer-readable medium, or loaded onto a general purpose non quantum computer, special purpose non quantum computer or other programmable data processing apparatus to produce a machine, such that the computer program instructions or software code which execute on the non-quantum computer or other programmable data processing apparatus, create the means for implementing the functions described herein.

Embodiments of computer-readable media includes, but are not limited to, both computer storage media and communication media including any medium that facilitates transfer of a computer program from one place to another. As used herein, a "computer storage media" may be any physical media that can be accessed by a computer. Examples of computer storage media include, but are not limited to, a flash drive or other flash memory devices (e.g. memory keys, memory sticks, key drive), CD-ROM or other optical storage, DVD, magnetic disk storage or other magnetic storage devices, memory chip, RAM, ROM, EEPROM, smart cards, Solid State Drive (SSD) devices or Hard Disk Drive (HDD) devices, or any other suitable medium from that can be used to carry or store program code in the form of instructions or data structures which can be read by a computer processor. Also, various forms of computer-readable media may transmit or carry instructions to a computer, including a router, gateway, server, or other transmission device, wired (coaxial cable, fiber, twisted pair, DSL cable) or wireless (infrared, radio, cellular, microwave). The instructions may comprise code from any computer-programming language, including, but not limited to, assembly, C, C++, Visual Basic, HTML, PHP, Java, Javascript, Python, and bash scripting.

Unless specifically stated otherwise, it will be appreciated that throughout the following description discussions utilizing terms such as processing, computing, calculating, determining, generating, or the like, refer to the action or processes of a computer or computing system, or similar electronic computing device, that manipulate or transform data represented as physical, such as electronic, quantities within the registers or memories of the computing system into other data similarly represented as physical quantities within the memories, registers or other such information storage, transmission or display devices of the computing system.

The terms "comprise," "include," "have," and any variations thereof, are intended to cover a non-exclusive inclusion, such that a process, method, article, or apparatus that comprises a list of elements is not necessarily limited to those elements, but may include other elements not expressly listed or inherent to such process, method, article, or apparatus.

Additionally, the word "exemplary" as used herein means serving as an example, instance, or illustration. Any aspect or design described herein as "exemplary" is not necessarily to be construed as preferred or advantageous over other aspects or designs.

As used herein, the notation "$|0\rangle$" designates the quantum state "ket-zero", and the notation "$|1\rangle$" designates the quantum state "ket-one", that may each be used as an initial quantum state in a quantum circuit.

As used herein, the terms "qubit", "qu-bit", and "qbit" may be used interchangeably to refer to a quantum bit in the context of quantum computing, which corresponds to a two-state quantum-mechanical system, such as, for example, the spin of an electron (spin-up or spin-down), the polarization of a photon (left-handed or righ-handed circular polarization). A qubit may be in a coherent superposition of multiple states simultaneously. Quantum data may comprise one or more qubits or a vector of qubits.

As used herein, the terms "T-count' and "T-depth" may be used interchangeably to refer to, depending on the embodiment, the number of T quantum gates in a quantum circuit or the number of T-stages in a quantum circuit. A "T-stage" may refer to a group of one or more quantum gates among one or more of T gates and conjugate $T^\dagger$ gates acting on distinct qubits and that can be performed simultaneously with respect to each other. For the purpose of determining the T-count of a quantum circuit, the quantum gates $T$ and $T^\dagger$ (which designate a quantum conjugate $T$ gate as described below) may be treated interchangeably in some embodiments.

The terms "quantum" or "quantum computing" as used in the present subject disclosure are intended to cover any computer, computing system, processing or computing operation, configured to use or exploit quantum mechanical phenomena. A computer, processor, calculator, computing system, computing node, computing task, computer job, processing, algorithm, and processing resource configured to use or exploit quantum mechanical phenomena will be referred to herein as "quantum" (a quantum computer, quantum processor, quantum calculator, quantum computing system, quantum computing node, quantum computing task, quantum computer job, quantum processing, quantum algorithm, and quantum processing resource, respectively. In contrast, a computer, processor, calculator, computing system, computing node, computing task, computer job, processing, algorithm, and processing resource which is not configured to use or exploit quantum mechanical phenomena may be referred to herein as "classical" or "non-quantum" (a classical computer, classical processor, classical calculator, classical computing system, classical computing system, classical computing node, classical computing task, classical computer job, classical algorithm, classical processing, classical processing resource, respectively). A quantum processor (also referred to herein as a quantum processing unit (or QPU)) may be configured to perform both quantum processing and classical processing.

The term "hybrid" as used in the present subject disclosure, for example as applied to a computer, an algorithm, a computer task, a computer job, refers to the combination of classical and quantum.

The present subject disclosure may advantageously be implemented on any suitable computing environment, such as, for example, comprising a computer configured with one or more classical resources (e.g. one or more CPUs), a computer configured with quantum resources (e.g. one or more QPUs), a hybrid computer configured with one or more classical resources and one or more quantum processing resources, an electronic component, an electronic chipset, a QPU, an electronic circuitboard, an electronic circuit, a quantum processing chipset, a quantum computer, etc.

In quantum computing, a computing operation may be described by its result modeled in the form of a target quantum state (denoted $|\psi_{target}\rangle$). Obtaining a direct description of such target quantum state is typically not considered for achieving this state, as describing the target quantum state as a complex vector is inherently inefficient as it comes at an exponential computational cost.

For this reason, another approach for preparing a target quantum state focuses on a quantum circuit capable of preparing the desired target quantum state. The quantum circuit may be described as the decomposition of a unitary operator $U$ (that corresponds to the quantum circuit) into a sequence of one or more quantum gates $U_1, ..., U_n$, and operating on an initial quantum state (e.g. $|0\rangle$) comprising one or two qubits. Therefore the target quantum state may be described as the output of the quantum circuit operating on the initial quantum state, for example according to the following equation:

$$|\psi_{target}\rangle = U_n \cdots U_1 |0\rangle$$

As used herein, the terms "quantum gate", "quantum logic gate", or "gate" may be used interchangeably to refer to an operator which performs an operation on input data suitable for representing one or more qubits.

In the present subject disclosure, the term "apply" or its derivatives may be used, in particular with respect to a quantum gate operation and input data, to refer to the performing the quantum gate operation on the input data.

In the present subject disclosure, the terms "tensor product" and "Kronecker product" may be used interchangeably to refer to a tensor product operation between 2 or more matrices, for example 2 or more $2 \times 2$ matrices with each of the matrix in the product corresponding to a matrix of the set $S = \{I, X, Y, Z\}$.

For technical reasons, the majority of today's quantum computers can only implement gates acting on 1 or 2 qubits.

When considering the complexity of implementing a circuit on a quantum computer, several questions arise, among which the question of which gates may be used to implement the circuit. In one or more embodiments, a decomposition of the proposed circuit into 1- or 2-qubit gates, may be considered for purposes of comparison between different technologies (for implementing the gates, e.g. using photons, ions), but also for practical reasons: In some embodiments, quantum computers used for implementing embodiments of the present subject disclosure may be configured to only use these elementary gates. In one or more embodiments, a set of quantum gates into which any other gate can be decomposed may be chosen, and performance metrics may be defined to evaluate the performance of an implementation.

Because any quantum gate acting on any number of qubits may be decomposed in a combination of one or more of 1-qubit gate and 2-qubit gate, the set of the 1-qubit and 2-qubit gates is sometimes referred to as a universal gate set. In some embodiments, a set of quantum gates that is approximately universal, that is, a set of quantum gates that typically comprise a limited number of gates that are sufficient to approximate any quantum gate to any desired precision, may advantageously be used to build the quantum gates used in embodiments of the present subject disclosure.

Quantum computing typically involve qubits undergoing one or more quantum logic gate operations.

In some applications, designing quantum algorithms for execution on a quantum computer require expressing matrices used by the algorithm in a suitable manner for execution on a quantum computer.

Pauli matrices are widely used in the field of quantum computing, for example for computing a Hamiltonian of a quantum system, which typically involve computing tensor products (sometimes referred to as Kronecker products) of n matrices of the set $S = \{I, X, Y, Z\}$ of 2-by-2 matrices comprising the identity matrix $I = \begin{bmatrix} 1 & 0 \\ 0 & 1 \end{bmatrix}$ and the $X$, $Y$, and $Z$ Pauli matrices of complex numbers.

Pauli matrices (and the identity matrix) are 2-by-2 matrices which are used in both the quantum physics and quantum computing fields.

In some embodiments, one may therefore consider the following set $S = \{I, X, Y, Z\}$ of 2-by-2 matrices comprising the identity matrix:

$$I = \begin{bmatrix} 1 & 0 \\ 0 & 1 \end{bmatrix}$$

and the following *X, Y,* and Z Pauli matrices of complex numbers:

$$X = \begin{bmatrix} 0 & 1 \\ 1 & 0 \end{bmatrix}$$

$$Y = \begin{bmatrix} 0 & -i \\ i & 0 \end{bmatrix}$$

$$Z = \begin{bmatrix} 1 & 0 \\ 0 & -1 \end{bmatrix}$$

For example, the Z matrix applied to a quantum state operates to invert such quantum state, and the *Y* matrix applied to a quantum state operates to invert such state with a phase shift of *+i* or *-i.*

Different quantum gates may be used in a quantum circuit as elementary quantum circuits operating on a given number of qubits. As they are the building blocks of a quantum circuit, 1-qubit and 2-qubit gates are considered to have a size / quantum cost of 1, and a depth / delay of 1 (the delay of execution of an elementary gate, that is, a 1 qubit or 2-qubit gate, may sometimes be denoted $\Delta$ in the present subject disclosure). In some embodiments, 3-qubit gates such as the Toffoli gate, Fredkin gate and Peres gate may be considered for designing arithmetic circuits. Depending on the embodiment, these 3-qubit gates may be implemented using any suitable (approximate) universal gate sets, such as the exemplary approximate universal gate sets described above.

In contrast to logic gates (used in non-quantum computational devices), quantum gates are typically designed to be reversible, so that any quantum circuit corresponding to a sequence of one or more quantum gates can itself be reversible.

Controlled quantum gates are gates that operate on two or more qubits, wherein one or more qubits operate to control operations of the gate.

Reference may be made in the present subject-disclosure to the following quantum gates:

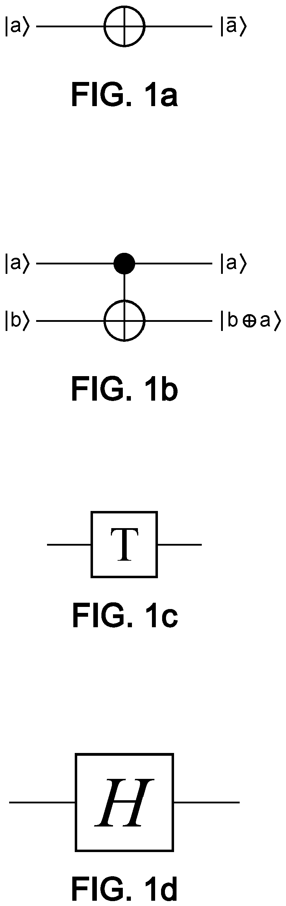

Fig. 1a shows a diagram representing a quantum NOT gate.

A quantum NOT gate (also referred to as "Pauli-X gate") performs a NOT operation on quantum data comprising an input qubit. The NOT operation corresponds to a XOR logical operation for a logic gate: the output qubit is $|1\rangle$ for an input qubit of 10), and the output qubit is 10) for an input qubit of 11).

With respect to an input qubit $|a\rangle$, the binary complement of $|a\rangle$ that is the output qubit of a quantum NOT gate applied to $|a\rangle$ may be denoted $|\bar{a}\rangle$ or $|a \oplus 1\rangle$.

A quantum NOT gate may be represented by a Pauli matrix X:

$$X = \begin{bmatrix} 0 & 1 \\ 1 & 0 \end{bmatrix}$$

Fig. 1b shows a diagram representing a quantum Controlled-NOT gate.

The Controlled-NOT gate (which may be referred herein to as a "CNOT" gate) is a controlled quantum gate which performs a NOT operation on input quantum data comprising a first input qubit depending on a second input qubit (which may be referred to as the "control bit").

For example, as illustrated on Fig. 1b, a quantum CNOT gate may be configured to perform a NOT operation on the first input bit (to operate as a quantum NOT gate on the first input bit) under the condition that the second input qubit is 11), and to otherwise leave the first input bit unchanged. The output qubit resulting from the performance or not of the NOT gate operation on the first input bit, under the control of the control bit, may be indifferently referred to as the "result" bit or the "target" bit.

A quantum CNOT gate may be represented by the following matrix *cX*:

$$cX = \begin{bmatrix} 1 & 0 & 0 & 0 \\ 0 & 1 & 0 & 0 \\ 0 & 0 & 0 & 1 \\ 0 & 0 & 1 & 0 \end{bmatrix}$$

In the present subject disclosure, a quantum CNOT gate which performs a CNOT gate operation on quantum input data comprising a first qubit $|a\rangle$ and a second qubit $|b\rangle$ may sometimes be denoted $CNOT(|a,b\rangle)$. The operation of a CNOT gate may be represented as mapping the input qubits $|a, b\rangle$ to $|a, b \oplus a\rangle$:

$$|a, b\rangle \longmapsto |a, b \oplus a\rangle$$

where $\oplus$ represents a logical XOR operation.

The qubit on which the XOR is applied (or not) may be referred as the "target" qubit, whereas the qubit controlling the CNOT gate may be referred to as the "control" qubit.

With respect to an input qubit $|b\rangle$, the output target qubit of a quantum CNOT gate applied to $|b\rangle$ under the control qubit $|a\rangle$ may be denoted $|b \oplus a\rangle$.

The phase shift gates is a family of single-qubit quantum gates that map the basis states 10) and 10). The probability of measuring a $|1\rangle$ or $e^{i\varphi}|1\rangle$ is unchanged after applying this quantum gate, however it modifies the phase of the quantum state. The phase shift quantum gate is represented by the matrix:

$$P(\varphi) = \begin{bmatrix} 1 & 0 \\ 0 & e^{i\varphi} \end{bmatrix}$$

where $\varphi$ is the phase shift with the period $2\pi$.

As an example of phase shift gate, the quantum gate called "$T$ gate" is a phase shift quantum gate for $\varphi = \dfrac{\pi}{4}$ which may also be defined as a $\pi/4$ Pauli $Z$ rotation:

$$T = R_Z(\pi/4)$$

Fig. 1c shows a diagram representing a quantum T gate.

A Hadamard gate operates to map the states $|0\rangle$ and $|1\rangle$ to $\dfrac{|0\rangle+|1\rangle}{\sqrt{2}}$ and $\dfrac{|0\rangle-|1\rangle}{\sqrt{2}}$, respectively, and can be represented by a Hadamard matrix:

$$H = \frac{1}{\sqrt{2}} \begin{bmatrix} 1 & 1 \\ 1 & -1 \end{bmatrix}$$

Fig. 1d shows a diagram representing a quantum Hadamard gate.

Different (approximate) universal sets of quantum gates may be used for generating a quantum circuit.

For example, a set of quantum gates comprising gates of a Clifford set (which may also be called the Clifford group) ({CNOT, *Hadamard, S*}) and a T gate, which can advantageously be used in fault-tolerant quantum circuit design, may be used. A Clifford gate is a gate of the Clifford group, which is a set of mathematical transformations which represent a set of quantum operations which normalize the n-qubit Pauli group by mapping the set of n-fold Pauli group into itself. Gates of the Clifford group may be generated by three gates: the Hadamard gate, the phase gate S, and the CNOT gate.

As described above, the *T* gate is a phase shift gate (operating a phase shift $\varphi = \dfrac{\pi}{4}$) that operates on one qubit which may be represented by the following transformation matrix:

$$T = \begin{bmatrix} 1 & 0 \\ 0 & e^{i\varphi} \end{bmatrix} \text{ with } \varphi = \frac{\pi}{4}.$$

A quantum (Hermitian) conjugate transpose T gate (sometimes also called "adjoint" T gate), which may be

denoted $T^\dagger$ in the present subject disclosure, also operates on one qubit, and can be represented by the following matrix:

$$T^\dagger = \begin{bmatrix} 1 & 0 \\ 0 & e^{-i\varphi} \end{bmatrix}$$

The 5 gate is a one-qubit Clifford gate defined as follows:

$$S = T^2 = \begin{bmatrix} 1 & 0 \\ 0 & e^{i\varphi} \end{bmatrix} \text{ with } \varphi = \frac{\pi}{2}.$$

The resulting complexity of the quantum circuits proposed in the present subject disclosure according to embodiments directly depends on the gate set used for implementing the circuit (even though the Solovay-Kitaev theorem establishes a close connection between the complexities obtained with different universal gate sets).

Three main metrics can be used for purposes of assessing the complexity of a quantum circuit.

A first metric relates to the (quantum) width of the circuit, which corresponds to the number of qubits required to implement the circuit. While some qubits are necessary to the circuit as they are used in the one or more operations performed by the circuit, other qubits - sometimes referred to as "ancillary" - may typically be used as temporary computation space.

A second metric that may be used relates to the (quantum) cost, which corresponds to the number of gates in the circuit (as expressed in the form of a combination of 1-qubit and 2-qubit gates only (noting that any n-qubit gate with $n > 2$ can be decomposed into a combination of 1-qubit and 2-qubit gates)).

A third metric relates to the (quantum) delay, which corresponds to the depth of the circuit when it is expressed only with 1-qubit and 2-qubit gates. The quantum delay may be seen as providing information on how long the circuit will take to accomplish its task.

As discussed above, one of the main tasks of a quantum compiler is to reduce or minimize the resources needed to execute a given quantum algorithm. This reduction or minimization is important in the compilation stack as it makes quantum computation more practical and efficient.

Besides their fundamental role in quantum computing, qubits are a crucial resource as they can be used as a trade-off for some other resources. An example is provided by the field of quantum error correction: multiple error-prone qubits can be used to form one reliable logical qubit.

In addition, additional qubits can be valuable for the design and implementation of quantum algorithms as they can sometimes be used to lower the execution time, notably by reducing the computational depth of certain quantum algorithms using various optimization procedures or by enabling their parallelization.

Qubits can also be used as a trade-off for quantum gates. For instance, implementing the CCZ gate requires 7 T gates, whereas it can be done with only 4 T gates by incorporating an ancillary qubit. Also, several algorithms designed for optimizing the number of T gates are relying on ancillary qubits.

Therefore, optimizing the number of qubits by reducing (or minimizing) such number can advantageously enable the execution of a given quantum algorithm if the number of qubits at disposal is insufficient, or it can free up some qubits which can then be used as a trade-off for other resources. In either case, the optimization of the number of qubits is more beneficial, in particular if it is not done at the expense of some other critical resources, such as non-Clifford gates which are typically costly to implement fault-tolerantly in most quantum error correcting codes.

The present subject provides methods for efficiently reducing (in some embodiments optimizing) the number of qubits in quantum circuits and in ZX-diagrams depicting lattice surgery operations, without increasing the number of non-Clifford gates.

The present subject disclosure provides methods for reducing (in some embodiments optimizing) the number of qubits in a given quantum circuit.

Advantageously, the proposed method uses the ZX-calculus as an intermediate language to establish a correspondence between the qubits optimization problem and graph theoretical problems. In some embodiments, the proposed method may comprise translating a given quantum circuit into a ZX-diagram, performing some transformation on this ZX-diagram and translating it back into a quantum circuit with an reduced (in some embodiments optimized) number of qubits.

The ZX-calculus is a diagrammatic language composed of wires and nodes. A node may be characterized by its type (green or red) and may have an associated angle (which may sometimes be referred herein to as the "phase", and denoted $\alpha$). When representing a node, the phase may be omitted when it is equal to zero.

A "spider" is a green or red node that can have incident wires, referred to as input wires of the spider if they are attached to the left side of the node or output wires of the spider if they are attached to the right side of the node. Green node spiders may be referred to as "Z spiders" and red node spiders as "X spiders".

In the figures of the present disclosure, red node spiders are represented by gray-shaded disks, while green node spiders are represented by transparent disks.

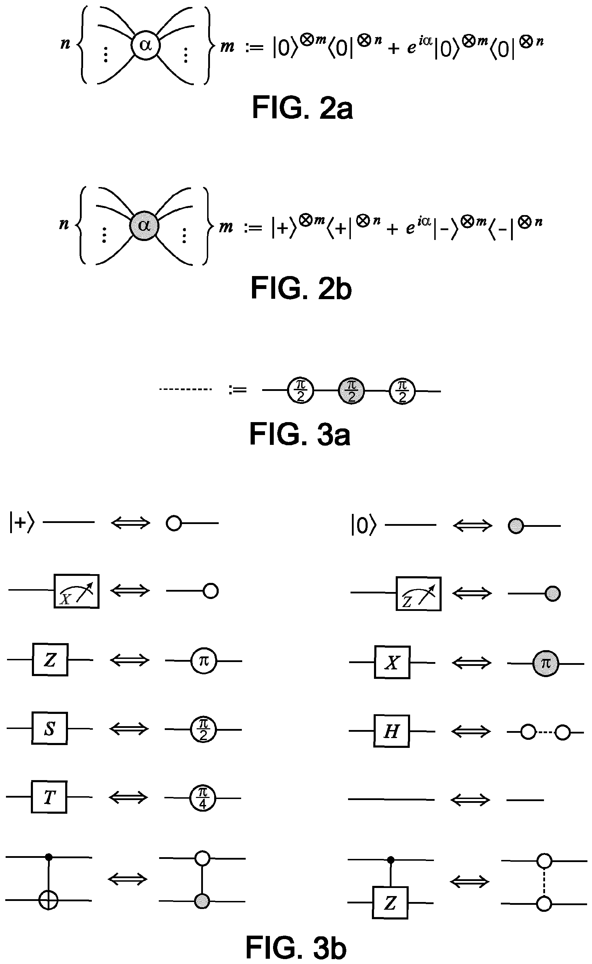

Figures 2a and 2b illustrate exemplary spiders.

Fig. 2a show an exemplary green node spider of phase $\alpha$ that has $n$ input wires and $m$ output wires, which represents the following linear map:

$$|0\rangle^{\otimes m}\langle 0|^{\otimes n} + e^{i\alpha}|1\rangle^{\otimes m}\langle 1|^{\otimes n}$$

Fig. 2b show an exemplary red node spider of phase $\alpha$ that has $n$ input wires and m output wires, which represents the following linear map:

$$|+\rangle^{\otimes m}\langle +|^{\otimes n} + e^{i\alpha}|-\rangle^{\otimes m}\langle -|^{\otimes n}$$

A ZX-diagram is composed of wires and spiders which can be connected by wires. Vertical wires of a ZX-diagram can be interpreted as either bent to the right or to the left, without altering the overall interpretation of the diagram. A wire is said to be an "open wire" if at least one of its endpoints is not connected to a node. For a given ZX-diagram $D$, an open wire is an input wire of $D$ if it has at least one open endpoint pointing towards the left, and it is an output wire of $D$ if it has at least one open endpoint pointing towards the right.

In the figures of present subject disclosure, for the sake of clarity and without limitation, the one or more open endpoints of input wires are represented at the far left of the ZX-diagram (before all nodes), and the one or more open endpoints of output wires at the far right of the diagram (after all nodes), as commonly done for quantum circuits.

In some embodiments, an ZX-diagram associated to a quantum circuit composed of CNOT and rotations gates may be generated by using one or more of the following procedures:

- Substitute all Z rotations (respectively, X rotations) of angle $\alpha$ with green nodes (respectively, red nodes) having the same angle $\alpha$.
- Substitute all Z measurements (respectively, X measurements) by red nodes (respectively, green nodes).
- Substitute all qubits initialization in the $|+\rangle$ state (respectively, $|0\rangle$ state) by green nodes (respectively, red nodes).
- For each CNOT gate, replace the control node with a green node and the target node with a red node.
- Keep the same connectivity.

In some embodiments, an ZX-diagram associated to a Clifford+T circuit may be generated by using a correspondence table (which may also be referred to as a "translation table") such as illustrated by Fig. 3b. In Fig. 3b, a Hadamard quantum gate is represented for convenience of representation by a dashed edge, such as illustrated in Fig. 3a.

In the present subject disclosure, two ZX-diagrams are "equivalent" if and only if they represent the same linear map.

A variety of rules have been defined in ZX-calculus that are usable for transforming a ZX-diagram into another, equivalent, ZX-diagram.

Meta-rule: If two ZX-diagrams have the same open wires and the same set of nodes connected in the same manner, then these two diagrams are equivalent.

Identity rule: A wire is equivalent to a spider with no phase and two incident wires, as illustrated by Fig. 4a.

Fusion rule: If two Z spiders are connected by at least one wire, then they can be fused together into a single spider, and the resulting phase is the sum of their individual phases, as illustrated by Fig. 4b.

The fusion rule also holds for X spiders, as illustrated by Fig. 4c, as every rule of the ZX-calculus remains true when swapping Z and X spiders.

Lattice surgery is a measurement-based method for performing fault-tolerant logical operations, originally developed for surface code quantum computing as a method of deforming and combining planar code surfaces. Lattice surgery can be viewed as a method to implement logical operations where groups of physical qubits arranged on lattices can be merged and split to realize entangling gates and teleport logical information. Typical lattice surgery operations therefore include the so-called "split" and "merge" operations. The split operation operates to split a logical qubit into several logical qubits, and the merge operation operates to merge several logical qubits into a single logical qubit.

Further details on the concept of lattice surgery and its link to ZX-calculus may be found in the paper entitled "Surface code quantum computing by lattice surgery," by D. Horsman et al., New Journal of Physics, 14(12):123011, 2012, and in the paper entitled "The ZX calculus is a language for surface code lattice surgery," by N. de Beaudrap and D. Horsman, Quantum, 4:218, 2020.

For the surface code lattice surgery, two types of split and merge operations can be distinguished, based on the type of logical operator on which the operation acts non-trivially: smooth or rough. It has been shown that the ZX-calculus can be used as a language for the surface code lattice surgery, where the wires of a ZX-diagram are associated with logical qubits and the spiders are representing the lattice surgery operations acting on these logical qubits.

As illustrated by Fig. 5a, red spiders represent rough operations, while green spiders represent smooth operations.

The split operation may be represented by a spider having one input wire and multiple output wires. For example, the smooth and rough splits of a single logical qubit into two logical qubits may be represented by a green and red spider respectively, with one input wire and two output wires, as illustrated by Fig. 5a, which shows a smooth split operation (Fig. 5a(1)) and a rough split operation (Fig. 5a(2)).

The merge operation can be seen as the converse of the split operation, and may be represented by a spider having multiple input wires and one output wire. However, unlike the split operation, the merge operation is non-deterministic. Pauli errors, which are correlated to the outcome of the measurements involved in realizing this operation, may be introduced on all but one of the input wires. For example, the smooth and rough merges of two logical qubits may be represented by a green and red spider respectively, with two input wires and one output wire, and where a Pauli error may occur on one of the input wires, as illustrated by Fig. 5b. Fig. 5b(1) shows a smooth merge operation (involving a red spider of angle $s\pi$, where $s \in \{0,1\}$), and Fig. 5b(2) shows a rough merge operation (involving a green spider of angle $s\pi$, where $s \in \{0,1\}$).

As the value of $s$ is known only once the merge has been realized, the merge operation is non-deterministic by nature.

Still, some sequences of lattice surgery operations can be realized deterministically even if they include some non-deterministic merge operations. To do so, a so-called "correction" must be found for each of the potential Pauli errors, which may be based on modifying the subsequent operations to cancel out the effect of the Pauli error.

For example, the CNOT gate can be implemented using lattice surgery operations as illustrated by Fig. 5c (where $s \in \{0,1\}$).

The following describes proposed algorithms for optimizing the number of qubits required to implement a given ZX-diagram using lattice surgery operations according to embodiments of the present subject disclosure, without connectivity constraints in some embodiments.

In one or more embodiments, a given ZX-diagram $D$ may be transformed into another equivalent ZX-diagram $D'$ by using the above-described ZX-calculus rules, such that $D'$ can be implemented using lattice surgery operations with a reduced (in some embodiments minimal) number of logical qubits.

A so-called "fixed-endvertices cutwidth" problem which can advantageously be linked to one or more graph-theoretical problems is introduced, and proof of the NP-hardness of this problem is provided.

Fig. 6 shows a block diagram illustrating the data processing (10) of data representing a first quantum circuit that can be implemented using $n$ qubits, according to embodiments of the present subject disclosure.

Such data processing may advantageously be implemented using any suitable computational device, such as for example a quantum computational device (e.g. by a quantum processing node of a computer system), a non-quantum (classical) computational device, or a hybrid computational device comprising a quantum computational device and a non-quantum (classical) computational device.

In addition, such data processing may advantageously be implemented, e.g. on a classical processing device, for processing an input quantum circuit to be implemented on a quantum computational device or a hybrid computational device comprising a quantum computational device and a non-quantum (classical) computational device.

In the present subject disclosure, embodiments of the proposed data processing scheme are described in the context of quantum computing, that is, for implementation by a quantum computational device. In this context, the terms "bit" and "qubit" may be used interchangeably to designate a qubit. However, it will be appreciated by those having ordinary skill in the relevant art that any suitable computing environment, including a non-quantum computing environment or a hybrid quantum/non-quantum environment, may be used to implement the proposed scheme in place of the quantum computing context described herein, which is given by way of example only.

On may consider in some embodiments a first quantum circuit configured to operate on n qubits, such as, for example a first quantum circuit that may be represented by a combination of quantum gates which can be implemented using n qubits.

In one or more embodiments, a first ZX-diagram that represents the first quantum circuit may be determined (11). In some embodiments, data representing the first quantum circuit may be processed to generate data representing a first ZX-diagram that represents the first quantum circuit.

Once the first ZX-diagram that corresponds to the first quantum circuit has been determined, various ZX-calculus rules may advantageously be used to perform operations on the first ZX-diagram in order to obtain a second ZX-diagram and determine a corresponding quantum circuit that can be implemented with less than n qubits.

In one or more embodiments, one or more operations may be performed (12) on the first ZX-diagram in order to generate a second ZX-diagram.

In one or more embodiments, the one or more operations based on the first ZX-diagram performed may comprise reordering (rearranging the order of) the spiders in the first ZX-diagram.

As described in further details below, performing the one or more operations on the first ZX-diagram may comprise in some embodiments: Applying one or more rewriting rules of the ZX-calculus on the first ZX-diagram to generate the second ZX-diagram.

In one or more embodiments, once the second ZX-diagram has been generated, a second quantum circuit that is represented by the second ZX-diagram may be determined (13).

In one or more embodiments, the one or more operations on the first ZX-diagram may be configured to reduce the number of qubits with which the second quantum circuit can be implemented to be less than the $n$ qubits. The present subject disclosure therefore advantageously provides schemes for, based on an input quantum circuit that requires n qubits for its implementation, determining an optimized quantum circuit that corresponds to the input quantum circuit and can be implemented with less than n qubits.

In one or more embodiments, the one or more operations performed based on the first ZX-diagram may comprise one or more operations performed on one or more ZX-diagrams that are based on the first ZX-diagram.

In one or more embodiments, a graph data structure may be used.

For example, in some embodiments, the one or more operations comprise: Determining a graph data structure based on the first ZX-diagram, based on graph configuration data which comprise a mapping between vertices of the graph data structure and respective spider data of one or more spiders of the first ZX-diagram; Performing data processing on the graph data structure based on an algorithm to determine a sequence of subsets of vertices of the graph data structure; and Determining the second ZX-diagram based on the graph data structure and the determined sequence of subsets of vertices.

In some embodiments, the spider data may comprise one or more of an identifier, an angle and a type.

In some embodiments, the graph data structure used according to the present subject disclosure may be an undirected graph, which is advantageously well suitable for operations that may be performed according to the present subject disclosure.

In one or more embodiments, the graph data structure may comprise: a respective vertex for each spider of the first ZX-diagram, one or more input vertex corresponding to each input wire of the first ZX-diagram, and one or more output vertex corresponding to each output wire of the first ZX-diagram, and respective edges, between each pair of vertices that correspond to adjacent spiders in the first ZX-diagram, between each vertex that corresponds to a respective input wire of the first ZX-diagram and vertex that corresponds to a spider incident to the input wire of the first ZX-diagram, and between each vertex that corresponds to a respective output wire of the first ZX-diagram and vertex that corresponds to a spider incident to the output wire of the first ZX-diagram.

In one or more embodiments, the reduction of qubits necessary to implement a given input quantum circuit may be performed by reordering spiders of the ZX-diagram determined based on the input quantum circuit.

In some embodiments, the one or more operations performed on the first ZX-diagram may comprise one or more operations of rearranging an order of spiders in one or more of the first (input) ZX-diagram and a (so-called "current") ZX-diagram determined based on the first (input) ZX-diagram.

Reordering the spiders of a ZX-diagram does not impact the operation(s) performed by said ZX-diagram, because such operation(s) are preserved even further to moving one or more of its spiders and/or bending one or more of its wires. With respect to impact on the operation(s) performed by a ZX-diagram, only connectivity matters.

In some embodiments, the one or more operations performed based on the first ZX-diagram may comprise one or more operations of rearranging an order of spiders in a current ZX-diagram determined based on the first ZX-diagram.

As discussed below with respect to exemplary embodiments, in one or more embodiments the data processing performed on the graph data structure may comprise: determining an ordered sequence (an ordering) of vertices of the graph data structure. In embodiments, the first vertex of the ordered sequence may correspond to the input wires of the first ZX-diagram. In embodiments, the last vertex of the ordered sequence may correspond to the output wires of the first ZX-diagram.

In some embodiments, the ordered sequence of vertices may be determined by ordering vertices of a subset of (to be ordered) vertices of the graph data structure. Advantageously, an ordered sequence of vertices of the graph associated with an optimized cutwidth may be determined, which may correspond to a ZX-diagram and a corresponding quantum circuit that can be implemented with less qubits.

For example, Fig. 7 shows four different ZX-diagrams that all correspond to the CNOT quantum gate, even though each of such ZX-diagrams represents a different sequence of lattice surgery operations.

As the number of logical qubits required to implement a given ZX-diagram using lattice surgery operations is equal to the maximum number of wires in any vertical cut of the diagram, rearranging the order of the spiders of a ZX-diagram or bending (or unbending) its wires may advantageously be used to reduce the number of qubits required to implement the associated sequence of lattice surgery operations.

Fig. 8(a) shows an exemplary first ZX-diagram (that may be determined based on an input quantum circuit) whose implementation requires $n$ qubits ($n = 9$), and Fig. 8(b) shows an exemplary second ZX-diagram that is equivalent to the first ZX-diagram of Fig. 8(a) and whose implementation requires m qubits, where $m < n$ (in the example $m = 4$).

Figs. 8(a) and 8(b) therefore illustrate an example that demonstrates how rearranging the order of spiders in a given exemplary (first) ZX-diagram (shown on Fig. 6(a)) can be used to reduce the number of logical qubits needed for its implementation.

In Fig. 8(a) and Fig. 8(b), the respective ZX-diagrams are annotated with the required number of logical qubits at each operation to implement them with the lattice surgery operations they represent, and each required number of logical qubits is represented under a respective vertical dashed line (vertical cut) which eases the determination of the required number of logical qubits at each operation. In the exemplary ZX-diagram illustrated by Fig. 8(a), the required numbers of logical qubits form the following sequence: 2, 4, 4, 6, 9, and 2. Therefore the maximum number of logical qubits required for implementing the ZX-diagram of Fig. 8(a) is 9 = $max$(2, 4, 4, 6, 9, 2). In the exemplary ZX-diagram illustrated by Fig. 8(b), the required numbers of logical qubits form the following sequence: 2, 4, 4, 6, 3, and 2. Therefore the maximum number of logical qubits required for implementing the ZX-diagram of Fig. 8(b) is 6 = $max$(2, 4, 4, 6, 3, 2).

In one or more embodiments, the one or more operations performed on the first (input) ZX-diagram may comprise one or more of moving one or more of its spiders and bending (or unbending) one or more of its wires, so as to transform the first (input) ZX-diagram such that the maximum number of wires over any vertical cut of the diagram is reduced (in some embodiments minimized).

In one or more embodiments, this qubits reduction (optimization) problem may advantageously be formalized in a graph-theoretical manner, so as to use any suitable graph theory algorithm that addresses this problem.

In order to formalize the qubits reduction (optimization) problem in a graph-theoretical manner, embodiments of the present subject disclosure may use a graph data structure that is determined based on the first (input) ZX-diagram.

In one or more embodiments, a graph data structure may be determined based on the first (input) ZX-diagram. In some embodiments, the graph data structure may be an undirected graph.

In some embodiments, the graph data structure may be determined using graph configuration data which comprise a mapping between vertices of the graph data structure and respective spider data of one or more spiders of the first ZX-diagram. Depending on the embodiment, spider data may comprise one or more of an identifier, an angle and a type (e.g. green or red or any equivalent as described above).

For example, in one or more embodiments, the graph data structure may be determined (e.g. generated) using the following graph determination rules:

Vertices of the graph data structure may be determined so that the graph data structure comprises:

> (VR1) a respective vertex for each spider of the first (input) ZX-diagram,
> (VR2) one or more input vertex corresponding to each input wire of the first (input) ZX-diagram, and
> (VR3) one or more output vertex corresponding to each output wire of the first (input) ZX-diagram.

In some embodiments, the graph data structure may have one vertex that corresponds to a plurality of (e.g. all of) the input wires of the first (input) ZX-diagram. In other embodiments, the graph data structure may have respective vertices that respectively correspond to a plurality of (e.g. all of) the input wires of the first (input) ZX-diagram.

Edges of the graph data structure may be determined so that the graph data structure comprises respective edges:

> (ER1) between each pair of vertices that correspond to adjacent spiders in the first ZX-diagram,
> (ER2) between each vertex that corresponds to a respective input wire of the first ZX-diagram and vertex that corresponds to a spider incident to the input wire of the first ZX-diagram, and
> (ER3) between each vertex that corresponds to a respective output wire of the first ZX-diagram and vertex that corresponds to a spider incident to the output wire of the first ZX-diagram.

In one or more embodiments, the data processing performed on the graph data structure may comprise: determining an ordering (in some embodiments in the form of an ordered sequence) of the vertices of the graph data structure or any of its subgraphs associated with an optimized cutwidth of the graph data structure. As usually defined in graph theory, the "cutwidth" of an undirected graph (which may sometimes be referred to as the "folding number" of the graph) is the smallest integer $k$ for which there is an ordering of the vertices of the graph such that every cut obtained by partitioning the vertices into earlier and later subsets of the ordering is crossed by at most $k$ edges.

The following provides exemplary definitions of a "ZX-diagram signature," a "vertex ordering," and a "cutwidth" of a graph, respectively, one or more of which may be used in embodiments of the present subject disclosure, for example for purposes of using graph theory algorithms designed for addressing a graph theory cutwidth type problem.

Definition 1 (ZX-diagram signature): Let $D$ be a ZX-diagram. A graph $G_D$ (e.g. an undirected graph) called the "signature graph" of $D$ may be determined based on the following graph determination rules:

(1) $G_D$ contains a vertex for each spider of $D$, for each input wire of $D$ ($I$ denotes this set of vertices) and for each output wire of $D$ (0 denotes this set of vertices),

(2) $G_D$ has an edge between the vertices $u$ and $v$ for all spiders $u$ and $v$ adjacent in $D$, for all $u \in I$ and spider $v$ incident to the input wire associated with $u$ in $D$ and for all $u \in O$ and spider $v$ incident to the output wire associated with $u$ in $D$.

The triple ($G_D$, $I$, $O$) may be referred to herein as the "signature" or "ZX-diagram signature" associated with the ZX-diagram $D$.

In one or more embodiments, in order to formulate the qubits reduction problem as a graph problem, the following definition of vertex ordering for a given graph may advantageously be used to incorporate the concept of moving the spiders of a ZX-diagram in our problem.

Definition 2 (Vertex ordering): Let G be a graph with vertex set $V$. A function $f$ is defined as an "ordering of the vertices $V$" if and only if $f(u) \in \{1, 2, ..., |V|\}$, wherein $|V|$ designates the cardinal of the set $V$ (number of elements of the set $V$, that is, number of vertices of the graph $G$), for all $u \in V$ and $f(u) \# f(v)$ for all $u, v \in V$ such that $u \neq v$.

The above-defined vertex ordering function can be used to show that the above-stated qubits reduction (optimization) problem is closely related to the graph-theoretical concept of "cutwidth", which may in one or more embodiments be used as defined in the following:

Definition 3 (Cutwidth): Let $G = (V, E)$ be a graph with vertex set $V$ and edge set $E$. The "cutwidth of a vertex" $v \in V$ with respect to a vertex ordering $f$, denoted by $cw_f(v)$, is defined as (or based on):

$$cw_f(v) = |\{(u, w) \mid f(u) \leq f(v) < f(w), (u, w) \in E\}|$$

where $|A|$ designates the cardinal of the set $A$ (the number of elements of the set $A$).

The "cutwidth of $G$ with respect to the vertex ordering function $f$", denoted "$cw_f(G)$", is defined as (or based on):

$$cw_f(G) = \max_{v \in V} cw_f(v)$$

The "cutwidth of $G$", denoted "$cw(G)$", is defined as (or based on) the minimum $cw_f(G)$ value over all possible orderings of the vertices in $V$:

$$cw(G) = \min_{f \in S_V} cw_f(G) = \min_{f \in S_V} \max_{v \in V} cw_f(v)$$

where $S_V$ is the set of all orderings of the vertices in $V$.

In graph theory, a so-called "cutwidth problem" may refer to the problem of computing the cutwidth of a given graph $G$ (and the corresponding vertex ordering). This problem is known to be NP-hard.

The following describes how the problem of rearranging the spiders of a ZX-diagram to reduce (minimize) the number of qubits required to implement it using lattice surgery operations relates to the cutwidth problem. As a consequence, embodiments of the present subject disclosure advantageously use graph-theory algorithms that address a graph cutwidth problem for rearranging the spiders of a ZX-diagram to reduce (minimize) the number of qubits required to implement it using lattice surgery operations, thereby leading to reducing (minimizing) the number of qubits required to implement a quantum circuit that corresponds to the ZX-diagram.

Let ($G_D$, $I$, $O$) be the signature of a ZX-diagram $D$ and $V$ be the set of vertices of the signature graph $G_D$. Choosing an ordering $f$ of the vertices $V$ of $G_D$ can be seen as moving the spider of the ZX-diagram $D$, provided that $f(u) < f(v) < f(w)$ for all $u \in I$, $v \in V\setminus\{I \cup O\}$, and $w \in O$ (as a spider cannot precede an input wire or succeed an output wire). Indeed, we can construct a ZX-diagram $D'$ from $f$ such that $D'$ contains the same nodes as $D$, connected in the same manner (and connected to the same input and output wires), but where the spiders of $D'$ are ordered according to $f$. Then, it follows that the ZX-diagrams $D'$ and $D$ are equivalent, but the number of qubits required to implement $D'$ in lattice surgery is equal to $ew_f$($G_D$). That is why we want to find $f$ such that $cw_f(G_D)$ is reduced (minimized). This problem corresponds to the problem of finding an ordering $f$ of the vertices of $G_D$ with reduced (minimum) cutwidth, with the first and last vertices of the ordering being fixed. We refer to this specific problem as the "fixed-end vertices cutwidth problem".

Problem 1 (Fixed-end vertices cutwidth): Let $G = (V, E)$ be a graph with vertex set $V$ and edge set $E$ and let $u, w \in V$ such that $u \neq w$. Find a vertex ordering $f$ of the vertices $V$ satisfying $f(u) \leq f(v) \leq f(w)$ for all $v \in V$ and such that $cw_f(G)$ is minimized.

The relation between the cutwidth problem and the fixed-end vertices cutwidth problem can advantageously be used to prove the NP-hardness of the fixed-endvertices cutwidth problem, as follows:

Theorem 1: The fixed-endvertices cutwidth problem is NP-hard.

Proof. Let $G = (V, E)$ be a graph with vertex set $V$ and edge set $E$. And let $f_{u,v}$ be an optimal solution to the fixed-end vertices for $G$ where $u$ and $v$ are the fixed first and last vertices of the ordering $f_{u,v}$. Then, by definition, the cutwidth of $G$ satisfies

$$cw(G) = \min_{\substack{u,v \in V \\ u \neq v}} cw_{f_{u,v}}(G)$$

Therefore, we can solve the cutwidth problem by solving the fixed-endvertices cutwidth problem a polynomial number of times, and then use these solutions to compute the cutwidth of $G$ via the above equation

$$cw(G) = \min_{\substack{u,v \in V \\ u \neq v}} cw_{f_{u,v}}(G)$$

in polynomial time. Thus, the fixed-endvertices cutwidth problem is at least as hard as the cutwidth problem, which is an NP-hard problem.

In some embodiments, once the graph data structure has been determined based on the first (input) ZX-diagram, data processing may be performed on such graph data structure based on a (graph problem) algorithm in order to determine a sequence of vertices of a subset of vertices of the graph data structure.

For example, in some embodiments, once the graph data structure has been determined based on the first (input) ZX-diagram, data processing may be performed on such graph data structure based on a (graph problem) algorithm in order to determine a sequence of vertices of the graph data structure.

As another example, once the graph data structure has been determined based on the first (input) ZX-diagram, data processing may be performed on such graph data structure based on a (graph problem) algorithm in order to determine a sequence of vertices of a subset of vertices of the graph data structure associated to the cutwidth of the graph data structure.

Depending on the embodiments, any algorithm that is suitable for solving a (cutwidth) graph problem, whether by determining an optimum or non-optimum solution to the (cutwidth) graph problem, may advantageously be used, in particular in cases where solving the graph problem contributes to solving the above-stated qubits reduction (optimization) problem through contributing to the determination of a second ZX-diagram that is equivalent to the first ZX-diagram and whose implementation requires less qubits than that of the first ZX-diagram. For example, in one or more embodiments, the data processing performed on the graph data structure may comprise: performing a cutwidth reduction algorithm on vertices of the graph data structure. In some embodiments, the graph problem algorithm may be solved in an fixed-end manner, as described above, for example by using a set of vertices of the graph on which the algorithm is performed which is configured to exclude any end vertex of the graph, so that first and last vertices of the graph may not be considered by the algorithm that computes a vertex ordering of vertices of the graph.

In one or more embodiments, the second ZX-diagram may be determined based on the the graph data structure and the determined sequence of subsets of vertices.

Fig. 9 illustrates an exemplary method according to embodiments of the present subject disclosure.

Fig. 9 shows an exemplary procedure that may be used in one or more embodiments for finding an optimal arrangement of spiders within a given ZX-diagram to reduce (in some embodiments minimize) the number of logical qubits required for its implementation via lattice surgery operations.

Fig. 9(a) shows a first ZX-diagram that may be determined based on a given first quantum circuit according to embodiments of the present subject disclosure.

A signature graph $G_D$ (illustrated on Fig. 9(b)) that corresponds to the ZX-diagram of Fig. 9(a) may be computed.

A fixed-endvertices cutwidth problem, for example as stated above, that is, a cutwidth problem under a fixed-end constraint, may then be solved for the signature graph $G_D$, for example using a suitable graph cutwidth determination algorithm. As illustrated by Fig. 9(c), solving the fixed-endvertices cutwidth problem may lead to a vertex ordering that produces the cutwidth.

In some embodiments, the determination of a solution to the fixed-endvertices cutwidth problem may lead to a vertex ordering which is a non-optimal solution, that is, a vertex ordering which does not produces the cutwidth (but instead a value higher than the cutwidth).

Therefore, depending on the embodiment, solving the fixed-endvertices cutwidth problem may lead to a vertex ordering that produces the cutwidth, or else to a vertex ordering that reduces the maximum number of edges that are crossed by any cut obtained by partitioning the vertices (excluding end vertices) into earlier and later subsets of the ordering.

Once a vertex ordering has been determined (e.g., depending on the embodiment, as an optimal or non optimal solution to the fixed-endvertices cutwidth problem), the order of the spiders in the first ZX-diagram may be rearranged based on the obtained vertex ordering, thereby leading to generating a second ZX-diagram (that is equivalent to the first ZX-diagram), for example as illustrated by Fig. 9(d).

A second quantum circuit may then be determined based on the second ZX-diagram, for example using a ZX-diagram to quantum circuit translation table, or a bidirectional quantum circuit - ZX-diagram translation table, such as illustrated by Fig. 3b.

In one or more embodiments, the reduction of qubits necessary to implement a given input quantum circuit may be performed using the fusion rule applied to spiders of the ZX-diagram determined based on the input quantum circuit.

In some embodiments, the one or more operations performed on the first ZX-diagram may comprise one or more operations of fusion of one or more spiders in one or more of the first (input) ZX-diagram and a (so-called "current") ZX-diagram determined based on the first (input) ZX-diagram. In some embodiments, an operation of fusion may comprise: merging a plurality of spiders having respective phases into one merged spider, and the resulting phase of the merged spider may be determined based on a combination of the respective phases.

In one or more embodiments, the qubits reduction (optimization) problem may advantageously be formalized in a graph-theoretical manner, so as to use any suitable graph theory algorithm that addresses this problem.

In order to formalize the qubits reduction (optimization) problem in a graph-theoretical manner, embodiments of the present subject disclosure may use a graph data structure that is determined based on the first (input) ZX-diagram.

In one or more embodiments, a graph data structure may be determined based on the first (input) ZX-diagram. In some embodiments, the graph data structure may be an undirected graph.

In some embodiments, the graph data structure may be determined using graph configuration data which comprise a mapping between vertices of the graph data structure and respective spider data of one or more spiders of the first ZX-diagram. Depending on the embodiment, spider data may comprise one or more of an identifier, an angle and a type (e.g. green or red or any equivalent as described above).

For example, in one or more embodiments, the graph data structure may be determined (e.g. generated) using the following graph determination rules:

Vertices of the graph data structure may be determined so that the graph data structure comprises:

(VR1) a respective vertex for each spider of the first (input) ZX-diagram,
(VR2) one or more input vertex corresponding to each input wire of the first (input) ZX-diagram, and
(VR3) one or more output vertex corresponding to each output wire of the first (input) ZX-diagram.

In some embodiments, the graph data structure may have one vertex that corresponds to a plurality of (e.g. all of) the input wires of the first (input) ZX-diagram. In other embodiments, the graph data structure may have respective vertices that respectively correspond to a plurality of (e.g. all of) the input wires of the first (input) ZX-diagram.

Edges of the graph data structure may be determined so that the graph data structure comprises respective edges:

(ER1) between each pair of vertices that correspond to adjacent spiders in the first ZX-diagram,
(ER2) between each vertex that corresponds to a respective input wire of the first ZX-diagram and vertex that corresponds to a spider incident to the input wire of the first ZX-diagram, and
(ER3) between each vertex that corresponds to a respective output wire of the first ZX-diagram and vertex that corresponds to a spider incident to the output wire of the first ZX-diagram.

In one or more embodiments, the data processing performed on the graph data structure may comprise: determining a path-decomposition of the graph data structure or any of its subgraphs having an optimized width.

As usually defined in graph theory, the "pathwidth" of graph G (which may sometimes be referred to as the "interval thickness," the "vertex separation number", or the "node searching number" of the graph) is one less than the size of the largest set in a sequence of subsets of vertices of the graph $G$ such that the endpoints of each edge appear in at least one of the subsets and such that each vertex appears in a contiguous subsequence of the subsets (such sequence may be referred to as a "path-decomposition").

In one or more embodiments, the data processing performed on the graph data structure may comprise: determining a path-decomposition of the graph data structure or any of its subgraphs.

The following provides an exemplary definition of a pathwidth of a graph that may be used in embodiments of the present subject disclosure, for example for purposes of using graph theory algorithms designed for addressing a graph theory pathwidth type problem. Reference is made to a vertex ordering function that may be defined as provided above (definition 2).

Definition 4 (Pathwidth): Let $G = (V, E)$ be a graph with vertex set $V$ and edge set $E$. The pathwidth of a vertex $v \in V$ with respect to a vertex ordering $f$, denoted by $pw_y(v)$, is defined as (or based on):

$$pw_f(v) = |\{u \mid f(u) \leq f(v) < f(w), (u, w) \in E\}|$$

where $|A|$ designates the cardinal of the set A (the number of elements of the set $A$).

The "pathwidth of $G$ with respect to the vertex ordering function $f$", denoted "$pw_f(G)$", is defined as (or based on):

$$pw_f(G) = \max_{v \in V} pw_f(v)$$

The "pathwidth of $G$", denoted "$pw(G)$", is defined as (or based on) the minimum $pw_f(G)$ value over all possible orderings:

$$pw(G) = \min_{f \in S_V} pw_f(G) = \min_{f \in S_V} \max_{v \in V} pw_f(v)$$

where $S_V$ is the set of all orderings of the vertices in $V$.

In graph theory, a so-called "pathwidth problem" may refer to the problem of computing the pathwidth of a given graph $G$ (and the corresponding vertex ordering).

Embodiments of the present subject disclosure advantageously use graph-theory algorithms that address a graph pathwidth problem for using the fusion rule on spiders of a ZX-diagram to reduce (minimize) the number of qubits required to implement it using lattice surgery operations, thereby leading to reducing (minimizing) the number of qubits required to implement a quantum circuit that corresponds to the ZX-diagram.

Let $(G_D, I, O)$ be the signature of a ZX-diagram $D$ and $V$ be the set of vertices of the signature graph $G_D$. Choosing an ordering $f$ of the vertices $V$ of $G_D$ can be seen as moving the spider of the ZX-diagram $D$, provided that $f(u) < f(v) < f(w)$ for all $u \in U$, $v \in V\backslash\{U, W\}$, and $w \in W$, where $U$ and $W$ are two subsets of $V$. Indeed, we can construct a ZX-diagram $D'$ from $f$ such that $D'$ contains the same nodes as $D$, connected in the same manner (and connected to the same input and output wires), but where the spiders of $D'$ are ordered according to $f$. Then, it follows that the ZX-diagrams $D'$ and $D$ are equivalent, but the number of qubits required to implement $D'$ in lattice surgery is equal to $pw_f(G_D)$. That is why we want to find $f$ such that $pw_f(G_D)$ is reduced (minimized). This problem corresponds to the problem of finding an ordering $f$ of the vertices of $G_D$ with reduced (minimum) pathwidth, with the first and last vertices of the ordering being fixed. We refer to this specific problem as the "fixed-endbags pathwidth problem":

Problem 2 (Fixed-endbags pathwidth): Let $G = (V, E)$ be a graph with vertex set $V$ and edge set $E$ and let $U, W \subseteq V$. Find a vertex ordering $f$ of the vertices $V$ satisfying $f(u) \leq f(v) \leq f(w)$ for all $u \in U$, $v \in V \setminus \{U, W\}$, $w \in W$, and such that $pw_f(G)$ is minimized.

In the present subject disclosure, the two subsets of vertices U and W introduced in the above definition of the fixed-endbags pathwidth problem may sometimes be denoted "fixed endbags."

In some embodiments, once the graph data structure has been determined based on the first (input) ZX-diagram, data processing may be performed on such graph data structure based on a (graph problem) algorithm in order to determine a path decomposition of the graph data structure, for example in the form of a sequence of subsets of vertices of the graph data structure.

Depending on the embodiments, any algorithm that is suitable for solving a (pathwidth) graph problem, whether by determining an optimum or non-optimum solution to the (pathwidth) graph problem, may advantageously be used, in particular in cases where solving the graph problem contributes to solving the above-stated qubits reduction (optimization) problem through contributing to the determination of a second ZX-diagram that is equivalent to the first ZX-diagram and whose implementation requires less qubits than that of the first ZX-diagram. For example, in one or more embodiments, the data processing performed on the graph data structure may comprise: performing a pathwidth reduction algorithm on vertices of the graph data structure. In some embodiments, the graph problem algorithm may be solved in an fixed-endbag manner, as described above, for example by using a set of vertices of the graph on which the algorithm is performed which is configured to exclude any end vertex of the graph, so that first and last vertices of the graph may not be considered by the algorithm that computes a vertex ordering of vertices of the graph.

In one or more embodiments, the second ZX-diagram may be determined based on the the graph data structure and the determined sequence of subsets of vertices.

Fig. 10 illustrates an exemplary method according to embodiments of the present subject disclosure.

Fig. 10 shows an exemplary procedure that may be used in one or more embodiments for optimizing (reducing or, depending on the embodiment, minimizing) the number of qubits required to implement a given ZX-diagram using lattice surgery operations by rearranging its spiders.

Fig. 10(a) shows a first ZX-diagram that may be determined based on a given first quantum circuit according to embodiments of the present subject disclosure.

In some embodiments, a signature graph $G_D$ (illustrated on Fig. 10(b)) that corresponds to the ZX-diagram of Fig. 10(a) may be computed based on the first ZX-diagram.

In some embodiments, a fixed-endbags pathwidth problem, for example as stated above, that is, a pathwidth problem under a fixed-endbag constraint, may then be solved for the signature graph $G_D$, for example using a suitable graph pathwidth problem algorithm. In some embodiments, the fixed-endbags constraint may be specified by fixing 2 subsets of vertices: one fixed subset of vertices at the input of the graph, and another fixed subset of vertices at the output of the graph. As illustrated by Fig. 10(b), solving the fixed-endbags pathwidth problem may lead to a vertex ordering (in the illustrated example vertices are ordered in alphabetical order, from "*a*" to "*m*"). In some embodiments, the solution of the fixed-endbags pathwidth problem may comprise an interval graph where each interval corresponds to a space in which the associated spider of the post-fusion ZX-diagram (of Fig. 11(b)) must lie and can be unfused.

Depending on the embodiment, solving the fixed-endbags pathwidth problem may lead to a vertex ordering that corresponds to an optimal solution in that it produces the pathwidth, or else to a vertex ordering that corresponds to a non-optimal solution, that is, a vertex ordering $f$ of the vertices $V$ satisfying $f(u) \le f(v) \le f(w)$ for all $u \in U$, $v \in V \setminus \{U, W\}$, $w \in W$, and such that $pw_f(G)$ is reduced.

Once a vertex ordering has been determined (e.g., depending on the embodiment, as an optimal or non optimal solution to the fixed-endbags pathwidth problem), the order of the spiders in the first ZX-diagram may be rearranged based on the obtained vertex ordering, thereby leading to generating a second ZX-diagram (that is equivalent to the first ZX-diagram), for example as illustrated by Fig. 10(c).

A second quantum circuit may then be determined based on the second ZX-diagram, for example using a ZX-diagram to quantum circuit translation table, or a bidirectional quantum circuit - ZX-diagram translation table, such as illustrated by Fig. 3b.

Fig. 11 illustrates an exemplary method according to embodiments of the present subject disclosure.

Fig. 11 shows an exemplary procedure that may be used in one or more embodiments for optimizing (reducing or, depending on the embodiment, minimizing) the number of qubits required to implement a given ZX-diagram using lattice surgery operations by rearranging its spiders and also using the fusion rule.

Fig. 11(a) also shows a first ZX-diagram that may be determined based on a given first quantum circuit according to embodiments of the present subject disclosure.

As illustrated by Fig. 11(b), in some embodiments, one or more fusion operations may be performed on one or more of the spiders of the first ZX-diagram. For example, each pair of spiders of the same colour (of the same type) which are linked by a wire identified in the first ZX-diagram may be merged into a single spider of the same colour (of the same type).

In some embodiments, a signature graph $G_D$ (illustrated on Fig. 11(c)) that corresponds to the ZX-diagram of Fig. 11(b) may then be computed based on the first ZX-diagram.

A fixed-endbags pathwidth problem, for example as stated above, that is, a pathwidth problem under a fixed-endbags constraint, may then be solved for the signature graph $G_D$, for example using a suitable graph pathwidth problem algorithm. As illustrated by Fig. 11(d), solving the fixed-endbags pathwidth problem may lead to a vertex ordering (in the illustrated example vertices are ordered in alphabetical order, from "*a*" to "*m*"). In some embodiments, the solution of the fixed-endbags pathwidth problem may comprise an interval graph where each interval corresponds to a space in which the associated spider of the post-fusion ZX-diagram (of Fig. 11(b)) must lie and can be unfused.

Once a vertex ordering has been determined, the order of the spiders in the first ZX-diagram may be rearranged based on the obtained vertex ordering, thereby leading to generating a second ZX-diagram (or an intermediate ZX-diagram on which further operations are performed for generating the second ZX-diagram) (that is equivalent to the first ZX-diagram), for example as illustrated by Fig. 11(f). For the sake of illustration only, Fig. 11(e) illustrates operations that may be performed in order to transpose the vertex ordering determined as a solution of the fixed-endbags pathwidth problem into a corresponding ZX-diagram. In particular, Fig. 11 (e) shows an exemplary interval supergraph corresponding to the vertex ordering of the graph of Fig. 11(d), and illustrates a structure of the graph according to the vertex ordering for performing one or more un-fusion operations to generate the second ZX-diagram, that may be performed.

In one or more embodiments, the second ZX-diagram (or an intermediate ZX-diagram on which further operations are performed for generating the second ZX-diagram) may be generated based on performing an un-fusion operation on one or more spiders of an intermediate ZX-diagram generated based on the optimized graph data structure.

In some embodiments, the operation of un-fusion may comprise: generating a plurality of spiders having respective phases based on a spider of the intermediate ZX-diagram, and the respective phases of the plurality of spiders may be determined based on a phase of the spider of the intermediate ZX-diagram

In some embodiments, the second ZX-diagram (or an intermediate ZX-diagram on which further operations are performed for generating the second ZX-diagram) may be constructed such that the horizontal wires (except the input and output wires) result from the application of the fusion rule, and each vertical wire corresponds to a wire in the post-fusion ZX-diagram of Fig. 11(b).

In one or more embodiments, the one or more operations performed based on the first ZX-diagram may comprise a lattice surgery sequentialization operation performed on an intermediate ZX-diagram generated based on the first ZX-diagram.

For example, in some embodiments, the exemplary intermediate ZX-diagram illustrated on Fig. 11(f) may be further processed so that the lattice surgery operations associated with the vertical wires can be done sequentially, such that there is no split or merge operation involving more than 2 logical qubits simultaneously, as illustrated by Fig. 11(g).

In one or more embodiments, the one or more operations performed based on the first ZX-diagram may comprise a ZX-diagram simplification operation performed on an intermediate ZX-diagram generated based on the first ZX-diagram.

For example, in some embodiments, as illustrated by Fig. 11(h), the exemplary intermediate ZX-diagram illustrated on Fig. 11(g) may be simplified by applying the identity rule and performing parallel operations without increasing the number of wires in any vertical cut of the diagram.

The exemplary operations illustrated on Fig. 11 result in an optimized second ZX-diagram (that is equivalent to the first ZX-diagram), as illustrated by Fig. 11(h), describing a sequence of lattice surgery operations that can be performed using 4 logical qubits (to be compared to the number of qubits required for performing the lattice surgery operations corresponding to the ZX-diagram of Fig. 11(a)).

A second quantum circuit may then be determined based on the second ZX-diagram, for example using a ZX-diagram to quantum circuit translation table, or a bidirectional quantum circuit - ZX-diagram translation table, such as illustrated by Fig. 3b.

Fig. 12 illustrates an exemplary method according to embodiments of the present subject disclosure.

Fig. 12 shows an exemplary procedure that may be used in one or more embodiments for optimizing the number of qubits in a quantum circuit.

As shown on Fig. 12, in some embodiments an initial (first) quantum circuit may be translated into a (first) ZX-diagram. In some embodiments, the determined (first) ZX-diagram may be optimized using a method according to embodiments of the present subject disclosure, leading to an optimized (second) ZX diagram. In some embodiments, the optimized (second) ZX-diagram may be translated back into a (second) quantum circuit with an optimized number of qubits.

An exemplary architecture of a computational device according to the present subject disclosure is illustrated on Fig. 13, which shows a computational device (20) configured to perform a data processing method in accordance with embodiments of the present subject disclosure.

The computational device (20) includes a data processing engine (21), an input interface (22), an output interface (23), and a memory (24).

In the architecture illustrated on Fig. 13, all of the input interface (22), output interface (23), and memory (24) are operatively coupled with one another through the data processing engine (21).

In some embodiments, the input interface (22) is configured for receiving input data representing a first quantum circuit (represented by a combination of quantum gates) that can be implemented using n qubits, and transmitting such input data to the data processing engine (21) for further processing according to embodiments of the present subject disclosure.

In some embodiments, the output interface (23) is configured for outputting data representing a second quantum circuit that can be implemented with less than the n qubits of the first quantum circuit represented by input data received by the input interface (22).

In some embodiments, the data processing engine (21) is configured for performing data processing functions according to embodiments of the present subject disclosure. For example, depending on the embodiment, the data processing engine (21) may be configured for performing one or more operations of a method comprising: Determining a first ZX-diagram that represents the first quantum circuit; Performing one or more operations on the first ZX-diagram to generate a second ZX-diagram; Determining a second quantum circuit that is represented by the second ZX-diagram, wherein the one or more operations on the first ZX-diagram are configured to reduce the number of qubits with which the second quantum circuit can be implemented to be less than the n qubits.

In some embodiments, the data processing engine (21) may include or may be included in a processor, which may be, depending on the embodiment, any suitable quantum processor (such as, for example any suitable quantum processing unit (QPU) and/or state machine, or a combination thereof), any suitable non-quantum processor (such as, for example any suitable computer processing unit (CPU) and/or state machine, or a combination thereof), or a combination thereof.

In some embodiments, the data processing engine (21) may implement a quantum logic-gate based circuit using, depending on the embodiment, any suitable quantum computing technology and architecture (e.g. trapped ion, neutral atoms in optical lattices, superconducting, superconductor spin qubits, photonics, superconducting transmon, nuclear magnetic resonance).

The data processing engine (21) may also comprise, or may be in communication with, (quantum and/or non-quantum) computer storage media, such as, without limitation, the memory (24) (which may include a quantum memory, a non-quantum memory or a combination thereof). In some embodiments, the memory (24) may be any type of quantum data storage or quantum computer storage medium coupled to the data processing engine (21) and operable with the interfaces (22) and (23) to facilitate management of data held/stored in association therewith, such as, for example, any memory configured for storing quantum data comprising qubits (e.g. an atomic gas quantum memory, a solid quantum memory, a gradient echo memory and any combination thereof). In some embodiments, the memory (24) may be any type of non-quantum data storage or non-quantum computer storage medium coupled to the data processing engine (21) and operable with the interfaces (22) and (23) to facilitate management of data held/stored in association therewith, such as, for example, any memory configured for storing data representing qubits.

It will be appreciated that the computational device (20) shown and described with reference to Fig. 13 is provided by way of example only. Numerous other architectures, operating environments, and configurations are possible. Other embodiments of the device may include fewer or greater number of components, and may incorporate some or all of the functionality described with respect to the device components shown in Fig. 13. Accordingly, although the input interface (22), output interface (23), memory (24), and data processing engine (21) are illustrated as part of the device (20), no restrictions are placed on the location and control of components (21) - (24). In particular, in other embodiments, components (21) - (24) may be part of different entities or computing systems.

In particular, the device (20) may be embedded in a classical computer system, a classical computing unit, a quantum computer system, a quantum computing unit, a hybrid computer system, any combination thereof, or any other device comprising a (quantum, non-quantum or hybrid) processor operatively coupled with a (quantum or non-quantum) memory.

The device (20), and more generally any device configured for implementing embodiments of the present subject disclosure, may be implemented in software, in hardware, or in a combination of software and hardware.

Although this subject disclosure has been disclosed in the context of certain preferred embodiments, it should be understood that certain advantages, features and aspects of the systems, devices, and methods may be realized in a variety of other embodiments. Additionally, it is contemplated that various aspects and features described herein can be practiced separately, combined together, or substituted for one another, and that a variety of combination and sub-combinations of the features and aspects can be made and still fall within the scope of the subject disclosure. Furthermore, the systems and devices described above need not include all of the modules and functions described in the preferred embodiments.

Information and signals described herein can be represented using any of a variety of different technologies and techniques. For example, data, instructions, commands, information, signals, bits, symbols, and chips can be represented by voltages, currents, electromagnetic waves, magnetic fields or particles, optical fields or particles, or any combination thereof.

Depending on the embodiment, certain acts, events, or functions of any of the methods described herein can be performed in a different sequence, may be added, merged, or left out all together (e.g., not all described acts or events are necessary for the practice of the method). Moreover, in certain embodiments, acts or events may be performed concurrently rather than sequentially.

**Claims**

1.  A data processing method for processing a first quantum circuit that can be implemented using n qubits, the method comprising:

    • Determining a first ZX-diagram that represents the first quantum circuit;
    • Performing one or more operations based on the first ZX-diagram to generate a second ZX-diagram;
    • Determining a second quantum circuit that is represented by the second ZX-diagram, wherein the one or more operations on the first ZX-diagram are configured to reduce the number of qubits with which the second quantum circuit can be implemented to be less than the n qubits.

2.  The method according to claim 1, wherein performing the one or more operations on the first ZX-diagram comprises: Applying one or more rewriting rules of the ZX-calculus on the first ZX-diagram to generate the second ZX-diagram.

3.  The method according to any of the preceding claims, wherein the one or more operations comprise:

    • Determining a graph data structure based on the first ZX-diagram, based on graph configuration data which comprise a mapping between vertices of the graph data structure and respective spider data of one or more spiders of the first ZX-diagram;
    • Performing data processing on the graph data structure based on an algorithm to determine a sequence of subsets of vertices of the graph data structure; and
• Determining the second ZX-diagram based on the graph data structure and the determined sequence of subsets of vertices.

4. The method according to claim 3, wherein the graph data structure comprises:

- a respective vertex for each spider of the first ZX-diagram, one or more input vertex corresponding to each input wire of the first ZX-diagram, and one or more output vertex corresponding to each output wire of the first ZX-diagram, and
- respective edges, between each pair of vertices that correspond to adjacent spiders in the first ZX-diagram, between each vertex that corresponds to a respective input wire of the first ZX-diagram and vertex that corresponds to a spider incident to the input wire of the first ZX-diagram, and between each vertex that corresponds to a respective output wire of the first ZX-diagram and vertex that corresponds to a spider incident to the output wire of the first ZX-diagram.

5. The method according to any of the preceding claims, wherein the one or more operations comprise one or more operations of rearranging an order of spiders in a current ZX-diagram determined based on the first ZX-diagram.

6. The method according to any of claims 3-5, wherein the data processing performed on the graph data structure comprises: determining an ordered sequence of vertices of the graph data structure, wherein the first vertex of the ordered sequence corresponds to the input wires of the first ZX-diagram and the last vertex of the ordered sequence corresponds to the output wires of the first ZX-diagram.

7. The method according to any of the preceding claims, wherein the one or more operations comprise one or more operations of fusion of one or more spiders of a ZX-diagram determined based on the first ZX-diagram, wherein an operation of fusion comprises:
Merging a plurality of spiders having respective phases into one merged spider, wherein the resulting phase of the merged spider is determined based on a combination of the respective phases.

8. The method according to any of claims 3 - 4 and 7, wherein the data processing performed on the graph data structure comprises: determining a path-decomposition of the graph or any of its subgraphs.

9. The method according to any of claims 7-8, wherein the second ZX-diagram is generated based on performing an un-fusion operation on one or more spiders of an intermediate ZX-diagram generated based on the optimized graph data structure, wherein the operation of un-fusion comprises:
generating a plurality of spiders having respective phases based on a spider of the intermediate ZX-diagram, wherein the respective phases of the plurality of spiders are determined based on a phase of the spider of the intermediate ZX-diagram.

10. The method according to any of the preceding claims, wherein the one or more operations comprise a lattice surgery sequentialization operation performed on an intermediate ZX-diagram generated based on the first ZX-diagram.

11. The method according to any of the preceding claims, wherein the one or more operations comprise a ZX-diagram simplification operation performed on an intermediate ZX-diagram generated based on the first ZX-diagram.

12. The method according to any of the preceding claims, further comprising: producing the second quantum circuit.

13. A computational device, the device comprising a processor and a memory operatively coupled to the processor, wherein the device is configured to perform a method according to any of claims 1 to 12.

14. A computer program product comprising computer program code embodied in a computer readable medium, said computer program code comprising instructions to, when provided to a computer system and executed, cause said computer system to perform a method according to any of claims 1 to 12.

15. A data set representing, for example through compression or encoding, a computer program product according to claim 14.

FIG. 1a

FIG. 1b

FIG. 1c

FIG. 1d

$$n \left\{ \cdots \alpha \cdots \right\} m := |0\rangle^{\otimes m}\langle 0|^{\otimes n} + e^{i\alpha}|0\rangle^{\otimes m}\langle 0|^{\otimes n}$$

**FIG. 2a**

$$n \left\{ \cdots \alpha \cdots \right\} m := |+\rangle^{\otimes m}\langle +|^{\otimes n} + e^{i\alpha}|-\rangle^{\otimes m}\langle -|^{\otimes n}$$

**FIG. 2b**

**FIG. 3a**

**FIG. 3b**

FIG. 4a

FIG. 4b

FIG. 4c

Smooth split          Rough split

# FIG. 5a

Smooth merge          Rough merge

# FIG. 5b

# FIG. 5c

11

> Determining a first ZX-diagram that represents the first quantum circuit

12

> Performing one or more operations on the first ZX-diagram to generate a second ZX-diagram

13

> Determining a second quantum circuit that is represented by the second ZX-diagram, wherein the one or more operations on the first ZX-diagram are configured to reduce the number of qubits with which the second quantum circuit can be implemented to be less than the $n$ qubits

10

# FIG. 6

FIG. 7

(a)

(b)

FIG. 8

Signature graph

Fixed-endvertices cutwidth problem

Optimized ZX-diagram

2  3  4  4  5  4  5  4  3  2

FIG. 9

Signature graph →

Fixed-endbags pathwidth problem

Corresponding ZX-diagram

FIG. 10

FIG. 11

FIG. 12

**FIG. 13**

Europäisches
Patentamt

European
Patent Office

Office européen
des brevets

**EUROPEAN SEARCH REPORT**

**Application Number**

EP 24 17 9389

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MICHAEL HANKS ET AL: "Effective Compression of Quantum Braided Circuits Aided by ZX-Calculus", ARXIV.ORG, CORNELL UNIVERSITY LIBRARY, 201 OLIN LIBRARY CORNELL UNIVERSITY ITHACA, NY 14853, 12 November 2020 (2020-11-12), XP081811898, DOI: 10.1103/PHYSREVX.10.041030 * abstract * * Sections I, III; III.A * | 1-15 | INV. G06N10/20 G06F8/41 |
| A | JOHN VAN DE WETERING: "ZX-calculus for the working quantum computer scientist", ARXIV.ORG, CORNELL UNIVERSITY LIBRARY, 201 OLIN LIBRARY CORNELL UNIVERSITY ITHACA, NY 14853, 27 December 2020 (2020-12-27), XP081847285, * abstract * * Sections 4, 4.1-4.6 * | 1-15 | |
| A | ROSS DUNCAN ET AL: "Graph-theoretic Simplification of Quantum Circuits with the ZX-calculus", ARXIV.ORG, CORNELL UNIVERSITY LIBRARY, 201 OLIN LIBRARY CORNELL UNIVERSITY ITHACA, NY 14853, 26 May 2020 (2020-05-26), XP081663109, * abstract * * Sections 2, 3, 5, 6 * | 1-15 | TECHNICAL FIELDS SEARCHED (IPC) G06N G06F |

-/--

The present search report has been drawn up for all claims

| Place of search | Date of completion of the search | Examiner |
|---|---|---|
| The Hague | 4 November 2024 | Bohn, Patrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt

European
Patent Office

Office européen
des brevets

**EUROPEAN SEARCH REPORT**

**Application Number**

EP 24 17 9389

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | NIEL DE BEAUDRAP ET AL: "The ZX calculus is a language for surface code lattice surgery", ARXIV.ORG, CORNELL UNIVERSITY LIBRARY, 201 OLIN LIBRARY CORNELL UNIVERSITY ITHACA, NY 14853, 4 June 2020 (2020-06-04), XP081677649, DOI: 10.22331/Q-2020-01-09-218 * abstract * | 1-15 | |
| A | KUNIHIRO WASA ET AL: "Hardness of braided quantum circuit optimization in the surface code", ARXIV.ORG, CORNELL UNIVERSITY LIBRARY, 201 OLIN LIBRARY CORNELL UNIVERSITY ITHACA, NY 14853, 1 February 2023 (2023-02-01), XP091426666, * abstract * | 12 | |
| | | | **TECHNICAL FIELDS SEARCHED (IPC)** |

The present search report has been drawn up for all claims

| Place of search | Date of completion of the search | Examiner |
|---|---|---|
| The Hague | 4 November 2024 | Bohn, Patrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

# EP 4 657 331 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. HORSMAN et al.** Surface code quantum computing by lattice surgery. *Journal of Physics*, 2012, vol. 14 (12), 123011

- **N. DE BEAUDRAP** ; **D. HORSMAN**. The ZX calculus is a language for surface code lattice surgery. *Quantum*, 2020, vol. 4, 218